# EUROPEAN PATENT APPLICATION

(11) **EP 2 015 232 A1**
(43) Date of publication of application: **14.01.2009**
(21) Application number: 07714520.9
(22) Date of filing: 19.02.2007
(51) Int. Cl.: G06K 19/077, G06K 19/06, G06K 19/07, G06K 19/08, H05K 9/00

(54) **NONCONTACT IC CARD**

(30) Priority: 31.03.2006 JP 2006100654
(71) Applicant: Kyodo Printing Co., Ltd., Tokyo 112-8501 (JP)
(72) Inventor: KOMATSU, Akihiko, Tokyo 112-8501 (JP); KAWAGUCHI, Keisuke, Tokyo 112-8501 (JP); TSUSHIO, Hajime, Tokyo 112-8501 (JP); NAGUMO, Akiko, Tokyo 112-8501 (JP)
(74) Representative: Kador & Partner
(86) International application number: PCT/JP2007/052994
(87) International publication number: WO 2007/116611

(57) **Abstract**

This invention provides a non-contact type IC card that can prevent electrostatic discharge failure of an IC chip caused by static electricity generated in a metal reflective layer.

In a non-contact type IC card, an inlet sheet 15 on which an antenna 11 and an IC chip 12 connected to the antenna 11 are mounted is embedded in a card base member 1 and a metal reflective layer (which corresponds to a hologram-magnetic recording layer 2) is laminated on the surface of the card base member. The non-contact type IC card includes conductive members 3 that are embedded in the card base member 1. The conductive members 3 attract static electricity generated in the metal reflective layer 2, and discharge the static electricity from a second surface of the card base member (the surface of the card) opposite to a first surface of the card base member (the back surface of the card) on which the metal reflective layer 2 is laminated.

## Description

### Technical Field

The present invention relates to a non-contact type IC card capable of performing non-contact data communication, and more particularly, to a non-contact type IC card where an antenna and an IC chip connected to the antenna are embedded in a card base member and a metal reflective layer is laminated on the surface of the card base member.

### Background Art

For development of a card technology in recent years, IC cards, which can be used for various purposes, have been provided as information recording media for various communication systems. The IC cards are classified into a contact type IC card that can write and read information by coming in contact with a dedicated device, and a non-contact type IC card that can write and read information only by approaching a dedicated device.

Since these IC cards have higher security and the large amount of information capable of being written thereon in comparison with a magnetic card including a magnetic recording layer, only one card can satisfy various purposes. For this reason, the IC card is infiltrating in aspects of the industrial purposes.

In particular among the IC cards, when information is written or read, a non-contact type IC card itself does not need to be inserted into a dedicated device and can be simply handled, so that the non-contact type IC card is infiltrating in aspects of the industrial purposes.

Further, there is also provided an IC card including a magnetic recording layer such as a magnetic stripe, therefore a communication system based on a conventional magnetic recording layer and a communication system based on an IC chip can be used with only one card.

Meanwhile, as a related document that is filed before the present invention, there is a document disclosing a plastic card with a magnetic stripe, which can perform functional information processing by using a magnetic recording layer while providing a visual effect using a hologram by performing hologram processing on the magnetic recording layer (for example, see Patent Document 1).

At present, it has been attempted to apply a magnetic recording layer including a hologram forming portion to a non-contact type IC card in order to achieve functional information processing while providing a visual effect by the hologram forming portion, like the plastic card with the magnetic stripe disclosed in the above Patent Document 1. Meanwhile, the hologram forming portion includes at least a metal reflective layer and a hologram layer.

However, when an electrostatic test defined by "JIS X 6305-6:2001(ISO/IEC 10373-6:2001)" or "JIS X 6305-7:2001(ISO/IEC 10373-7:2001)" is performed on the non-contact type IC card employing the magnetic recording layer provided with the hologram forming portion to discharge static electricity to the metal reflective layer of the hologram forming portion, discharge current flows into an IC chip through an antenna embedded in the non-contact type IC card due to the static electricity generated in the metal reflective layer. Therefore, the electrostatic discharge failure of the IC chip may occur.

For this reason, there is a demand for a non-contact type IC card that prevents the electrostatic discharge failure of the IC chip caused by static electricity generated in the metal reflective layer.

Meanwhile, as a related document that is filed before the present invention, there is a document disclosing an IC module including an IC module substrate, an IC chip provided on the IC module substrate, a mold that covers the IC chip, and a conductive member provided on the upper surface of the mold wherein the IC chip cannot break easily due to static electricity (for example, see Patent Document 2).
[Patent Document 1] Japanese Patent No. 3198183
[Patent Document 2] Japanese Patent Application Laid-open No. 2003-99744

### Disclosure of the Invention

### Problem to be solved by the Invention

In the above Patent Document 2, the conductive member is provided on the upper surface of the mold covering the IC chip to prevent the electrostatic discharge failure of the IC chip. However, the prevention of the electrostatic discharge failure of the IC chip, which is caused by static electricity generated in a metal reflective layer, is not considered at all.

The present invention has been made to solve the above-mentioned problems, and an exemplary object of the present invention is to provide a non-contact type IC card where an antenna and an IC chip connected to the antenna are embedded in a card base member and a metal reflective layer is laminated on the surface of the card base member, which can prevent the electrostatic discharge failure of the IC chip caused by static electricity generated in the metal reflective layer.

### Means for solving the problem

In order to achieve the above-mentioned exemplary object, the present invention has the following characteristics.

A non-contact type IC card according to an exemplary aspect of the invention where an inlet sheet on which an antenna and an IC chip connected to the antenna are mounted is embedded in a card base member and a metal reflective layer is laminated on the surface of the card base member, includes conductive members that are embedded in the card base member, and attract static electricity generated in the metal reflective layer and discharge the static electricity from a second surface of the card base member opposite to a first surface of the card base member on which the metal reflective layer is laminated.

Further, in the non-contact type IC card according to an exemplary aspect of the present invention, the conductive members are embedded in the card base member so as to be positioned close to the second surface of the card base member rather than the first surface of the card base member.

Furthermore, in the non-contact type IC card according to an exemplary aspect of the present invention, the conductive members are embedded in the card base member so that at least a part of the conductive members overlap the metal reflective layer in a laminating direction of the non-contact type IC card.

In addition, in the non-contact type IC card according to an exemplary aspect of the present invention, the conductive members are embedded in the card base member so as to be positioned in the vicinity of the metal reflective layer without overlapping the metal reflective layer in the laminating direction of the non-contact type IC card.

Further, in the non-contact type IC card according to an exemplary aspect of the present invention, the conductive members are mounted on the same surface of the inlet sheet as an IC chip-mounting surface of the inlet sheet on which the IC chip is mounted.

Furthermore, the non-contact type IC card according to an exemplary aspect of the present invention further includes a conductive wire that is embedded in the card base member, and attracts static electricity generated in the metal reflective layer to the conductive members.

In addition, in the non-contact type IC card according to an exemplary aspect of the present invention, the conductive wire is mounted on the surface of the inlet sheet opposite to the IC chip-mounting surface of the inlet sheet on which the IC chip is mounted.

Further, in the non-contact type IC card according to an exemplary aspect of the present invention, the conductive wire is mounted on the same surface of the inlet sheet as the IC chip-mounting surface of the inlet sheet on which the IC chip is mounted.

Furthermore, in the non-contact type IC card according to an exemplary aspect of the present invention, the conductive members have a thickness corresponding to a distance between a mounting position on the surface of the inlet sheet and the second surface of the card base member.

In addition, in the non-contact type IC card according to an exemplary aspect of the present invention, the conductive members are embedded in the card base member so as to be positioned on upper and lower surfaces of the IC chip through the inlet sheet.

Further, in the non-contact type IC card according to an exemplary aspect of the present invention, the conductive members are reinforcing members for reinforcing the IC chip.

Furthermore, in the non-contact type IC card according to an exemplary aspect of the present invention, a magnetic recording layer, the metal reflective layer, and a hologram layer are sequentially laminated on the surface of the card base member.

### Effect of the Invention

In a non-contact type IC card according to the present invention, an inlet sheet on which an antenna and an IC chip connected to the antenna are mounted is embedded in a card base member and a metal reflective layer is laminated on the surface of the card base member. The non-contact type IC card includes conductive members that are embedded in the card base member. The conductive members attract static electricity generated in the metal reflective layer, and discharge the static electricity from a second surface of the card base member opposite to a first surface of the card base member on which the metal reflective layer is laminated. Accordingly, even when an electrostatic test defined by "JIS X 6305-6:2001(ISO/IEC 10373-6:2001)" or "JIS X 6305-7:2001(ISO/IEC 10373-7:2001)" is performed and static electricity is discharged to the metal reflective layer, the conductive member embedded in the card base member can attract the static electricity generated in the metal reflective layer and discharge the static electricity from the second surface of the card base member opposite to the first surface of the card base member on which the metal reflective layer is laminated. Therefore, it is possible to prevent the static electricity from flowing into the IC chip embedded in the card base member, thereby preventing electrostatic discharge failure of the IC chip.

### Best Mode for Carrying Out the Invention

### <CHARACTERISTIC OF NON-CONTACT TYPE IC CARD ACCORDING TO EXEMPLARY EMBODIMENT OF PRESENT INVENTION>

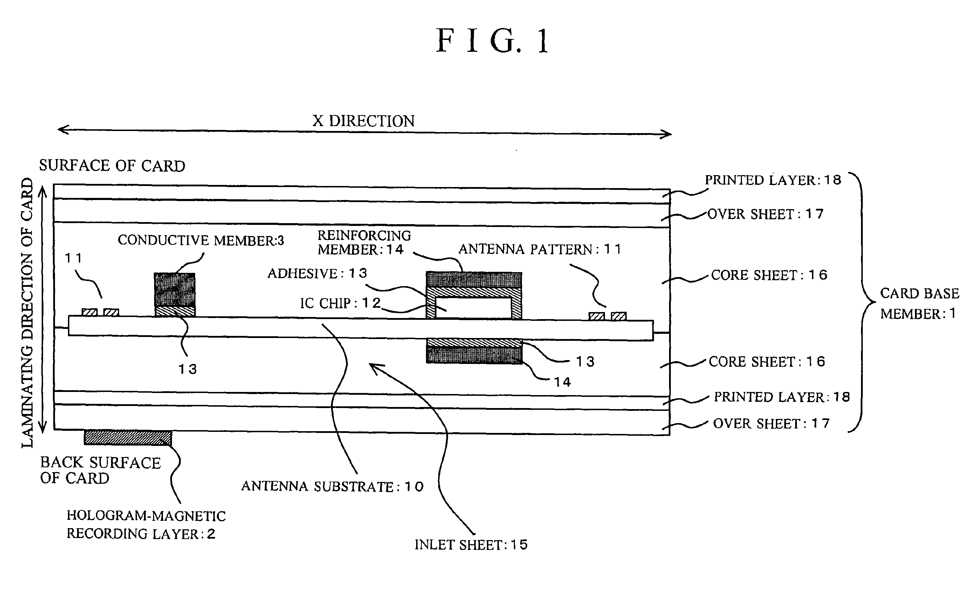

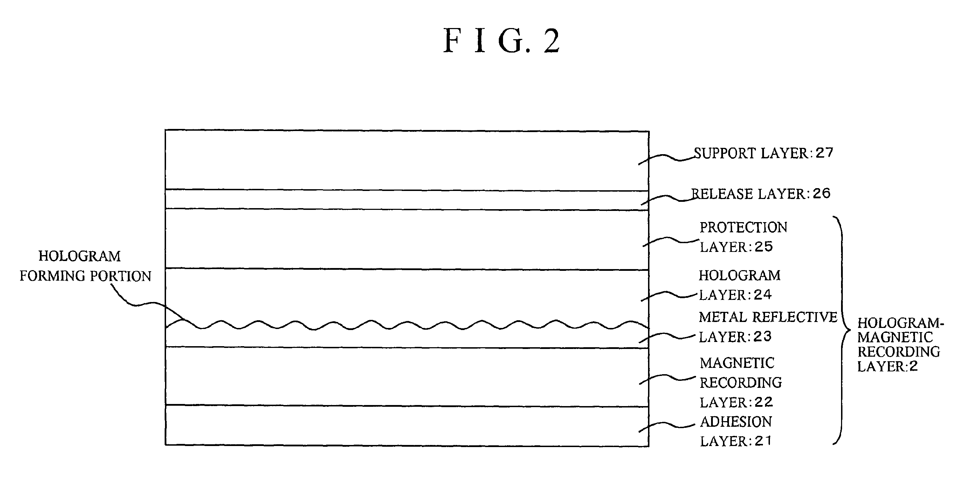

The characteristic of a non-contact type IC card according to an exemplary embodiment of the present invention will be described with reference to Figs. 1 and 2.

The non-contact type IC card according to this exemplary embodiment is a non-contact type IC card where a hologram-magnetic recording layer 2, which includes at least a magnetic recording layer 22, a metal reflective layer 23, and a hologram layer 24 as shown in Fig. 2, is laminated on the surface of a card base member (the back surface of the card) as shown in Fig. 1, and an inlet sheet 15 on which an antenna 11 and an IC chip 12 connected to the antenna 11 are mounted is embedded in the card base member 1.

Further, the non-contact type IC card according to this exemplary embodiment is characterized in that a conductive member 3 is embedded in the card base member 1. The conductive member attracts static electricity generated in the metal reflective layer 23 of the hologram-magnetic recording layer 2, and discharges the static electricity from a second surface of the card base member (the surface of the card) opposite to a first surface of the card base member (the back surface of the card) on which the hologram-magnetic recording layer 2 is laminated.

Accordingly, even when an electrostatic test defined by "JIS X 6305-6:2001(ISO/IEC 10373-6:2001)" or "JIS X 6305-7:2001(ISO/IEC 10373-7:2001)" is performed and static electricity is discharged to the metal reflective layer 23 of the hologram-magnetic recording layer 2, the conductive member 3 embedded in the card base member 1 can attract the static electricity generated in the metal reflective layer 23 and discharge the static electricity from the second surface of the card base member (the surface of the card) opposite to the first surface of the card base member (the back surface of the card) on which the hologram-magnetic recording layer 2 is laminated. Therefore, it is possible to prevent static electricity from flowing into the IC chip 12 embedded in the card base member 1, thereby preventing the electrostatic discharge failure of the IC chip 12. The non-contact type IC card according to this exemplary embodiment will be described in detail below with reference to accompanying drawings.

### (FIRST EXEMPLARY EMBODIMENT)

### <STRUCTURE OF NON-CONTACT TYPE IC CARD>

First, the structure of a non-contact type IC card according to this exemplary embodiment will be described with reference to Fig. 1.

As shown in Fig. 1, the non-contact type IC card according to this exemplary embodiment includes a hologram-magnetic recording layer 2 on the back surface of the non-contact type IC card (the back surface of the card).

As shown in Fig. 1, an antenna 11 and an IC chip 12 are embedded in the card base member 1 of this exemplary embodiment. The IC chip 12 is embedded in the card base member 1 so as to be connected to the antenna 11. Further, a method of connecting the IC chip 12 to the antenna 11 is not particularly limited, and the antenna 11 and the IC chip 12 may be connected to each other by any method.

### <CARD BASE MEMBER 1>

First, the card base member 1 of the non-contact type IC card according to this exemplary embodiment will be described with reference to Fig. 1.

In the card base member 1 of the non-contact type IC card according to this exemplary embodiment, as shown in Fig. 1, an antenna pattern 11, such as a helicoidal antenna or a capacitor, is formed on an antenna substrate 10, and the IC chip 12 is mounted on the antenna substrate 10 so that the formed antenna pattern 11 and the IC chip 12 are electrically connected to each other, thereby forming the inlet sheet 15 on which the antenna pattern 11 and the IC chip 12 are mounted.

Further, core sheets 16, which are formed of laminated base materials, are laminated on upper and lower surfaces of the inlet sheet 15 with the inlet sheet therebetween so as to cover the inlet sheet 15. An over sheet 17 and a printed layer 18 are sequentially laminated on the core sheet 16 that is provided on the surface of the card base member 1, and a printed layer 18 and an over sheet 17 are sequentially laminated on the core sheet 16 that is provided on the back surface of the card base member 1.

Accordingly, the card base member 1 shown in Fig. 1 is formed. Meanwhile, in the non-contact type IC card according to this exemplary embodiment, the hologram-magnetic recording layer 2 is laminated on the over sheet 17 that is provided on the back surface of the card base member 1.

Further, the inlet sheet 15 of this exemplary embodiment is formed by mounting reinforcing members 14, which protect the IC chip 12, on the upper and lower surfaces of the antenna substrate 10 by an adhesive 13. Each part of the card base member 1 of the non-contact type IC card according to this exemplary embodiment will be described in detail below.

### <CORE SHEET 16>

The core sheet 16 is a base member that forms a middle portion of the card base member 1, and is a base material that makes a card body have strength. Examples of a material that may be used as the material of the core sheet 16 include thermoplastic resins, such as a general-purpose polystyrene resin, an impact-resistant polystyrene resin, an acrylonitrile styrene resin, an ABS (acrylonitrile butadiene styrene copolymer) resin, an acrylic resin, a polyethylene resin, a polypropylene resin, a polyamide resin, a polyacetal resin, a PC (polycarbonate) resin, a vinyl chloride resin, a modified PPO resin, a polybutylene terephthalate resin, and a polyphenylene sulfide resin; alloy-based resins; and known resins that may be used as the card base member 1 forming the middle portion of the IC card body in the related art, such as an reinforced resin formed by adding glass fiber. Meanwhile, since vinyl chloride, PET-G, or the like have characteristics for performing self-fusing, an adhesive or an adhesive sheet is not needed for laminating. Therefore, it is preferable that vinyl chloride, PET-G, or the like be used as the material of the core sheet 16.

### <OVER SHEET 17>

The over sheet 17 is a base member that forms an outer portion of the card base member 1. Examples of a material that may be used as the material of the over sheet 17 include the resins that may be used as the material of the above-mentioned core sheet 16.

### <ANTENNA SUBSTRATE 10>

The antenna substrate 10 is a base member having an insulation property on which the antenna pattern 11 is formed. Examples of a material that may be used as the material of the antenna substrate 10 include resins, such as, a polyester resin, a polyethylene resin, a polypropylene resin, a polyimide resin, PET, PEN, and PET-G.

### <MATERIAL OF ANTENNA PATTERN 11>

Examples of a material that may be used as the material of the antenna pattern 11 include copper, aluminum, gold, silver, iron, tin, nickel, zinc, titanium, tungsten, solder, an alloy and the like. Meanwhile, an etching method and a printing method (a screen printing method or an offset printing method) may be used as a method of forming the antenna pattern 11 on the antenna substrate 10. Further, a winding method may be used to form the antenna pattern 11 on the antenna substrate 10.

### <ADHESIVE 13>

The adhesive 13 is used to mount the reinforcing members 14, which protect the IC chip 12, on the upper and lower surfaces of the antenna substrate 10. Meanwhile, examples of a material that may be used as the material of the adhesive 13 include any material that may be used to mount the reinforcing members 14 on the antenna substrate 10. For example, a UV curable resin, a moisture-curable resin, a thermosetting resin, and the like may be used.

### <REINFORCING MEMBER 14>

The reinforcing member 14 is a member that protects the IC chip 12. Meanwhile, examples of a material that may be used as the material of the reinforcing member 14 include any metallic material. For example, a stainless steel (SUS) may be used.

### <PRINTED LAYER 18>

The printed layer 18 is a layer that is formed by printing. Meanwhile, printing methods and materials, which are used to form the printed layer 18 of this exemplary embodiment, are not particularly limited, and the printed layer 18 may be formed using known printing methods and known materials.

### <STRUCTURE OF HOLOGRAM-MAGNETIC RECORDING LAYER 2>

The structure of the hologram-magnetic recording layer 2 of the non-contact type IC card according this exemplary embodiment will be described below with reference to Fig. 2.

The hologram-magnetic recording layer 2 includes an adhesion layer 21, a magnetic recording layer 22, a metal reflective layer 23, a hologram layer 24, and a protection layer 25. The hologram-magnetic recording layer 2 is laminated on a support layer 27 with a release layer 26 therebetween, thereby forming a "transfer sheet".

### <ADHESION LAYER 21>

The adhesion layer 21 is a layer for adhering the hologram-magnetic recording layer 2 onto the over sheet 17 that is provided on the back surface of the card base member 1. Examples of a material that may be used as the material of the adhesion layer 21 include synthetic resins such as vinyl chloride/vinyl acetate copolymers having an excellent heat-sealing property. It is preferable that the thickness of the adhesion layer 21 be about 5 µm.

### <MAGNETIC RECORDING LAYER 22>

The magnetic recording layer 22 is a layer on which information can be recorded, and is formed by performing printing or application using known magnetic paint. Meanwhile, the following material may be used as the magnetic paint. That is, the material is prepared by using a synthetic resin, such as a butyral resin, vinyl chloride/vinyl acetate copolymers, an urethane resin, a polyester resin, a cellulose-based resin, an acrylic resin, or styrene/maleic acid copolymer resins, as a binder resin; adding an urethane elastomer or a rubber-based resin such as nitrile rubber, if necessary; adding Co, Ni, Fe, or Cr alone or an alloy thereof, γ-Fe₂O₃, Fe₂O₃ or Fe₃O₄ containing Co, barium ferrite, strontium ferrite, a rare-earth Co magnetic substance or the like, a surfactant, a silane coupling agent, a plasticizer, wax, silicone oil, carbon, and other pigments as a magnetic substance, if necessary; and mixing them using three rollers, a sand mill, a ball mill, or the like. Meanwhile, it is preferable that the thickness of the magnetic recording layer 22 be in the range of about 10 to 15 µm.

### <METAL REFLECTIVE LAYER 23>

The metal reflective layer 23 is a layer for reflecting light. Examples of a material that may be used as the material of the metal reflective layer 23 include Al, Zn, Co, Ni, In, Fe, Cr, Ti, Sn, and various alloys thereof. Further, a vacuum deposition method, a sputtering method, a reactive sputtering method, an ion plating method, and an electroplating method may be used as a method of forming the metal reflective layer 23. Meanwhile, the thickness of the metal reflective layer 23 is preferably in the range of about 30 to 100 nm, and more preferably in the range of about 40 to 70 nm. Furthermore, it is preferable that the metal reflective layer 23 be formed of a continuous film in consideration of light reflectivity.

### <HOLOGRAM LAYER 24>

The hologram layer 24 is a layer for forming a hologram forming portion. Meanwhile, example of a material that may be used as the material of the hologram layer 24 include thermoplastic resins, such as polyvinyl chloride, acryl (for example, MMA), polystyrene, and polycarbonate; materials obtained by hardening thermosetting resins, such as unsaturated polyester, melamine, epoxy, polyester (metha)acrylate, urethane (metha)acrylate, epoxy (metha)acrylate, polyether (metha)acrylate, polyol (metha)acrylate, melamine (metha)acrylate, and triazine-based acrylate; or mixtures of the thermoplastic resins and the thermosetting resins. It is preferable that the thickness of the hologram layer 24 be about 2.5 µm.

### <PROTECTION LAYER 25>

The protection layer 25 is a layer for protecting the above-mentioned hologram layer 24. Meanwhile, examples of a material that may be used as the material of the protection layer 25 include a mixture of a polymethylmethacrylate resin and a thermoplastic resin, for example, vinyl chloride/vinyl acetate copolymers or a nitrocellulose resin; a mixture of a polymethylmethacrylate resin and a polyethylene wax; and a mixture of an acetylcellulose resin and a thermosetting resin, for example, an epoxy resin, a phenol resin, a thermosetting acrylic resin, or a melamine resin. It is preferable that the thickness of the protection layer 25 be in the range of about 1 to 2 µm.

### <RELEASE LAYER 26>

The release layer 26 is a layer for separating the above-mentioned hologram-magnetic recording layer 2 from the support layer 27. Meanwhile, examples of a material that may be used as the material of the release layer 26 include a thermoplastic acrylic resin, a polyester resin, a chlorinated rubber-based resin, a vinyl chloride-vinyl acetate copolymer resin, a cellulose-based resin, a chlorinated polypropylene resin, and a material that is obtained by adding oil silicon, fatty acid amide, or zinc stearate to the above-mentioned resins. It is preferable that the thickness of the release layer 26 be about 0.5 µm.

### <SUPPORT LAYER 27>

The support layer 27 is a layer that supports the hologram-magnetic recording layer 2. Meanwhile, examples of a material that may be used as the material of the support layer 27 include one independently selected from synthetic resins, such as a transparent polyethylene terephthalate film, polyvinyl chloride, polyester, polycarbonate, polymethyl methacrylate, and polystyrene, natural resins, paper, synthetic paper, and the like; and complexes that are obtained from the combination of the selected materials. It is preferable that a polyester film having tensile strength and heat resistance be used as the support layer 27. It is preferable that the thickness of the support layer 27 be about 25 µm.

Further, the following method may be used as a method of forming a transfer sheet of the hologram-magnetic recording layer 2 shown in Fig. 2. The method include includes, for example, sequentially forming the release layer 26 and the protection layer 25 on the support layer 27, applying a resin composition forming the hologram layer 24 in order to form the hologram forming portion, forming the metal reflective layer 23 by a deposition method, and sequentially forming the magnetic recording layer 22 and the adhesion layer 21. Accordingly, it is possible to form the "transfer sheet" of the hologram-magnetic recording layer 2 shown in Fig. 2.

Meanwhile, the above-mentioned method is an example, and the method of forming a transfer sheet is not limited thereto. As long as the "transfer sheet" of the hologram-magnetic recording layer 2 shown in Fig. 2 is formed, any method may be used. In this exemplary embodiment, the total thickness of the protection layer 25, the hologram layer 24, the metal reflective layer 25, and the magnetic recording layer 22 of the hologram-magnetic recording layer 2 of this exemplary embodiment is preferably 20 µm or less not to affect the magnetic recording.

According to this exemplary embodiment, the hologram-magnetic recording layer 2 where the magnetic recording layer 22, the metal reflective layer 23, and the hologram layer 24 are integrated is adhered onto the over sheet 17 that is provided on the back surface of the card base member 1, so that the non-contact type IC card shown in Fig. 1 in which the hologram-magnetic recording layer 2 is -laminated on the back surface of the card is formed. Therefore, it is possible to form the hologram-magnetic recording layer 2, which forms a beautiful hologram and can perform mechanical information processing, on the surface of the non-contact type IC card.

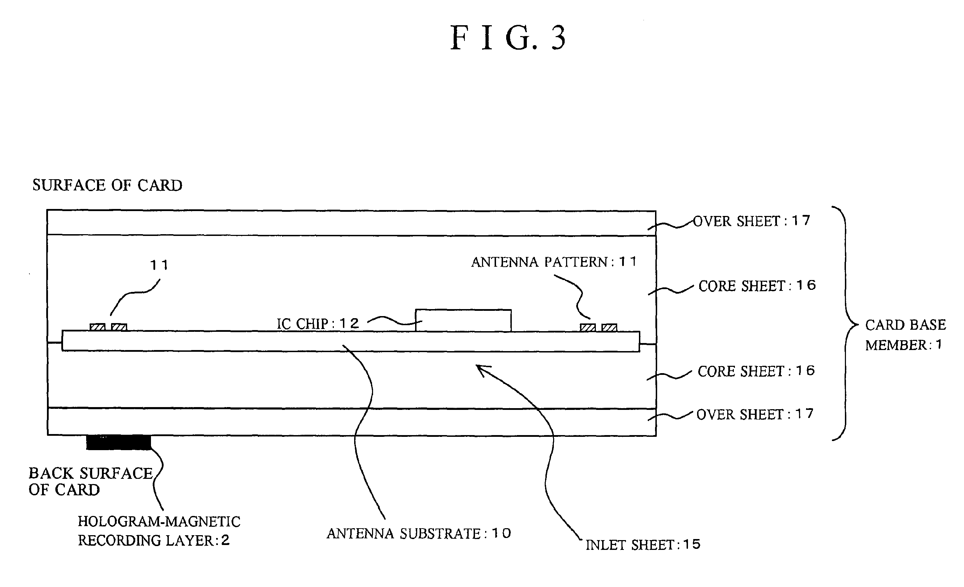

However, the non-contact type IC card where the antenna 11 and the IC chip 12 connected to the antenna 11 are embedded in the card base member 1 as shown in Fig. 3 and the hologram-magnetic recording layer 2 is laminated on the back surface thereof has the following problems. If an electrostatic test is performed in compliance with a test method defined by "JIS X 6305-6:2001(ISO/IEC 10373-6:2001)" of JIS, the IC card cannot withstand static electricity of ±6 kV that is a defined value defined by 4.3.7 of "JIS X 6322-1:2001(ISO/IEC 14443-1:2000)". Further, if an electrostatic test is performed in compliance with a test method defined by "JIS X 6305-7:2001(ISO/IEC 10373-7:2001)" of JIS, the IC card cannot withstand static electricity of ±6 kV that is a defined value defined by 4.3.7 of "JIS X 6323-1:2001(ISO/IEC 15693-1:2000)".

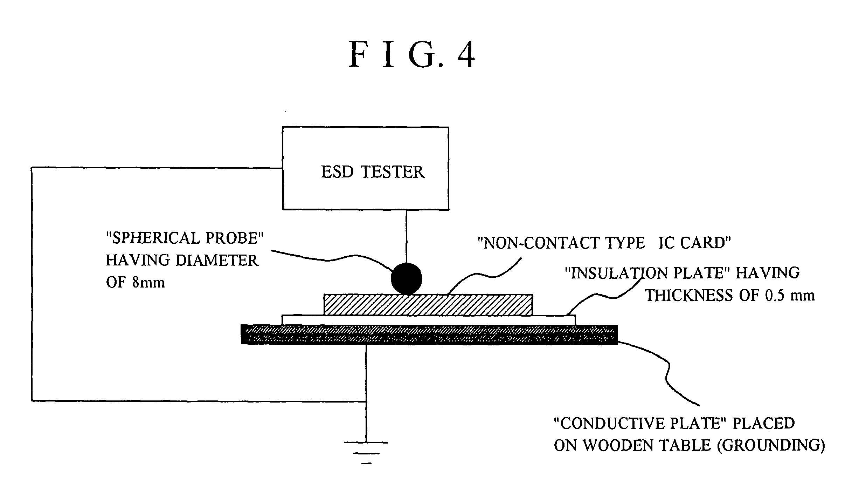

Meanwhile, an electrostatic test defined by "JIS X 6305-6:2001(ISO/IEC 10373-6:2001)" or "JIS X 6305-7:2001(ISO/IEC 10373-7:2001)" is performed using an electrostatic discharge test circuit shown in Fig. 4.

First, an "insulation plate" having a thickness of 0.5 mm is disposed on a "conductive plate" placed on a wooden table, and the "non-contact type IC card" is disposed on the "insulation plate". Then, a "spherical probe", which is connected to an "ESD tester" and has a diameter of 8 mm, comes in contact with the "non-contact type IC card". Subsequently, after static electricity is discharged from the "ESD tester" to the "non-contact type IC card", the performance of the IC chip 12 of the "non-contact type IC card" is tested.

Meanwhile, the electrostatic discharge test shown in Fig. 4 is performed under the following conditions:
Charge storage capacitor: 150pF ± 10%
Discharge resistance: 330Ω ± 10%
Charge resistance: 50 to 100 MΩ
Rise time: 0.7 to 1 ns

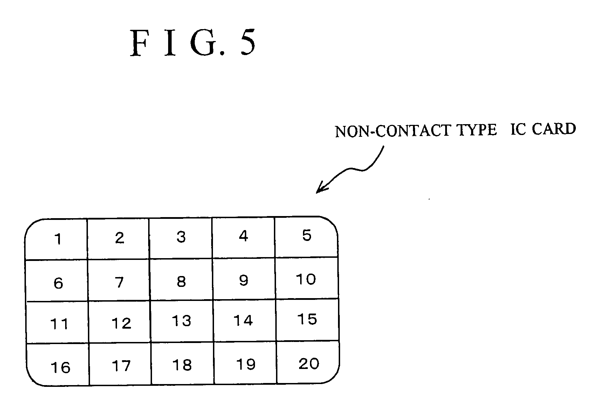

First, as shown in Fig. 5, each of the surface and the back surface of the non-contact type IC card is divided into twenty regions in the form of a 4 x 5 matrix. After that, the static electricity of +6 kV is applied to the twenty regions on the surface of the non-contact type IC card, and the static electricity of 6 kV is then applied to the twenty regions. Subsequently, the same processes as described above are performed on the back surface of the non-contact type IC card. Meanwhile, reference numerals "1" to "20" shown in Fig. 5 indicate the regions divided on the card in the electrostatic discharge test.

When the electrostatic test is performed using the electrostatic discharge test circuit shown in Fig. 4, the electrostatic discharge failure of the IC chip 12 embedded in the card base member 1 shown in Fig. 3 occurs. The reason for this is as follows: if an electrostatic test is performed using the electrostatic discharge test circuit shown in Fig. 4, static electricity is generated in the metal reflective layer 23 of the hologram-magnetic recording layer 2 shown in Fig. 3. Discharge current flows into the IC chip 12 through the antenna 11 due to the generated static electricity, so that excessive load is generated on the IC chip 12.

For this reason, the present inventors have tried to modify the non-contact type IC card in various ways and studied enthusiastically in order to meet the above-mentioned electrostatic test in the non-contact type IC card, which includes the hologram-magnetic recording layer 2 as shown in Fig. 3. As a result, the present inventors have found out from the test result as follows: if the conductive member 3, which attracts the static electricity generated in the metal reflective layer 23 of the hologram-magnetic recording layer 2 and discharges the static electricity from the surface of the card base member (the surface of the card) opposite to the surface of the card base member (the back surface of the card) on which the hologram-magnetic recording layer 2 is laminated, is embedded in the card base member 1 as shown in Fig. 1, the above-mentioned electrostatic test is met. The structure of the non-contact type IC card according to this exemplary embodiment will be described below with reference to Fig. 1.

In the non-contact type IC card according to this exemplary embodiment, the conductive member 3, which attracts the static electricity generated in the metal reflective layer 23 of the hologram-magnetic recording layer 2 and discharges the attracted static electricity to the outside of the card base member 1, is embedded in the card base member 1 as shown in Fig. 1.

Accordingly, even when an electrostatic test defined by "JIS X 6305-6:2001(ISO/IEC 10373-6:2001)" or "JIS X 6305-7:2001(ISO/IEC 10373-7:2001)" is performed and static electricity is discharged to the metal reflective layer 23 of the hologram-magnetic recording layer 2, the conductive member 3 can attract the static electricity generated in the metal reflective layer 23 and discharge the static electricity from the surface of the card base member (the surface of the card) opposite to the surface of the card base member (the back surface of the card) on which the hologram-magnetic recording layer 2 is laminated. Therefore, it is possible to prevent static electricity from flowing into the IC chip 12, thereby preventing the electrostatic discharge failure of the IC chip 12 that is embedded in the non-contact type IC card.

Meanwhile, examples of a material of the conductive member 3 of this exemplary embodiment include any material where electricity flows. For example, a stainless steel (SUS) may be used as the material of the conductive member.

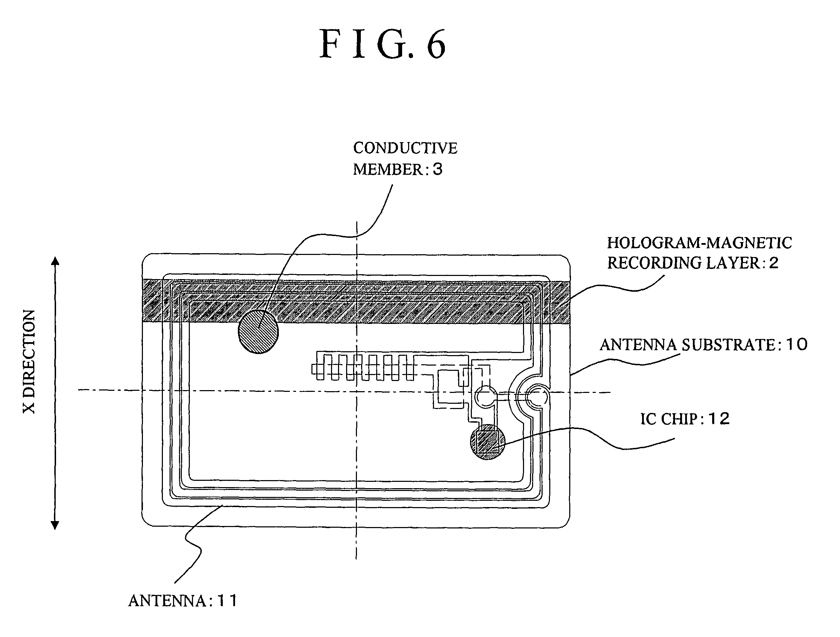

Further, the conductive member 3 of this exemplary embodiment is preferably embedded in the card base member 1 so that at least a part of the conductive member overlaps the hologram-magnetic recording layer 2 in the laminating direction of the non-contact type IC card as shown in Figs. 1 and 6.

Accordingly, the conductive member 3 can more easily attract the static electricity generated in the metal reflective layer 23 of the hologram-magnetic recording layer 2, so that it is possible to further prevent the electrostatic discharge failure of the IC chip 12 embedded in the non-contact type IC card.

Meanwhile, Fig. 6 is a plan view of the non-contact type IC card shown in Fig. 1, as seen from the surface of the card. An "X direction" shown in Fig. 6 corresponds to an "X direction" shown in Fig. 1.

As apparent from the plan view of Fig. 6, it can be seen that the conductive member 3 is disposed in the card base member 1 so as to overlap at least a part of the hologram-magnetic recording layer 2. Meanwhile, the "laminating direction of the card" means a laminating direction where sheets of the non-contact type IC card are laminated.

The conductive member 3 of this exemplary embodiment may not be embedded in the card base member 1 so as to overlap the hologram-magnetic recording layer 2 in the laminating direction of the non-contact type IC card as shown in Figs. 1 and 6. The conductive member may be embedded in the card base member 1 and be positioned in the vicinity of the hologram-magnetic recording layer 2 as shown in Figs. 7 and 8. Accordingly, the static electricity generated in the metal reflective layer 23 of the hologram-magnetic recording layer 2 is attracted to the conductive member 3 through a conductive wire 4, and the conductive member 3 discharges the static electricity, which is attracted through the conductive wire 4, from the surface of the card base member (the surface of the card) opposite to the surface of the card base member (the back surface of the card) on which the hologram-magnetic recording layer 2 is laminated.

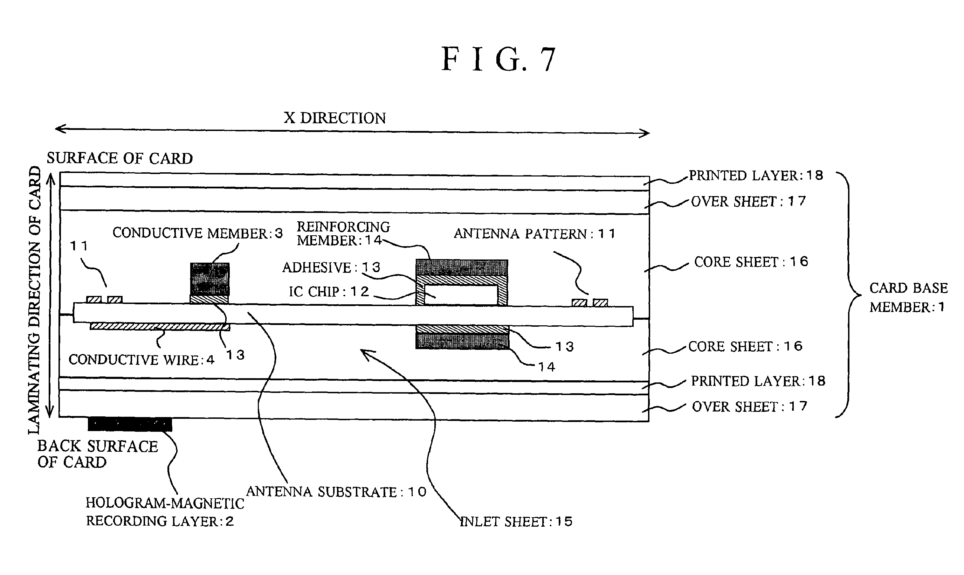

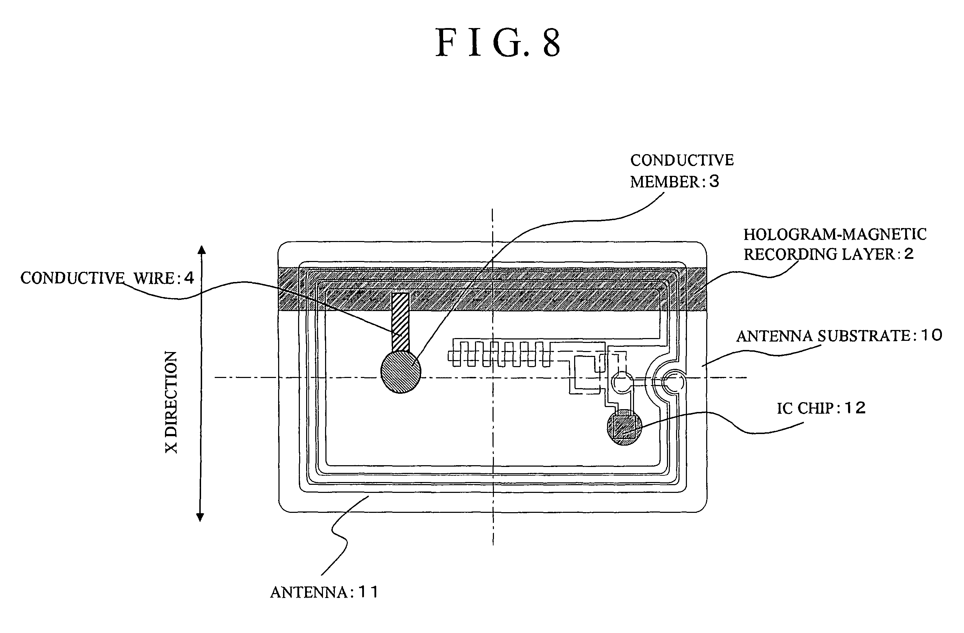

Meanwhile, Fig. 8 is a plan view of the non-contact type IC card shown in Fig. 7, as seen from the surface of the card. An "X direction" shown in Fig. 8 corresponds to an "X direction" shown in Fig. 7.

As apparent from the plan view of Fig. 8, it can be seen that the conductive member 3 is disposed in the card base member 1 so as to be positioned in the vicinity of the hologram-magnetic recording layer 2 without overlapping the hologram-magnetic recording layer 2.

Meanwhile, it is preferable that the conductive wire 4 be embedded in the card base member 1 so as to overlap the hologram-magnetic recording layer 2 and the conductive member 3 in the laminating direction of the non-contact type IC card as shown in Figs. 7 and 8 in order to attract the static electricity generated in the metal reflective layer 23 to the conductive member 3.

Further, the conductive wire 4 may be formed as a part of the antenna pattern 11 formed on the antenna substrate 10. Meanwhile, examples of a material of the conductive wire 4 include any material where electricity flows. For example, aluminum may be used as the material of the conductive wire.

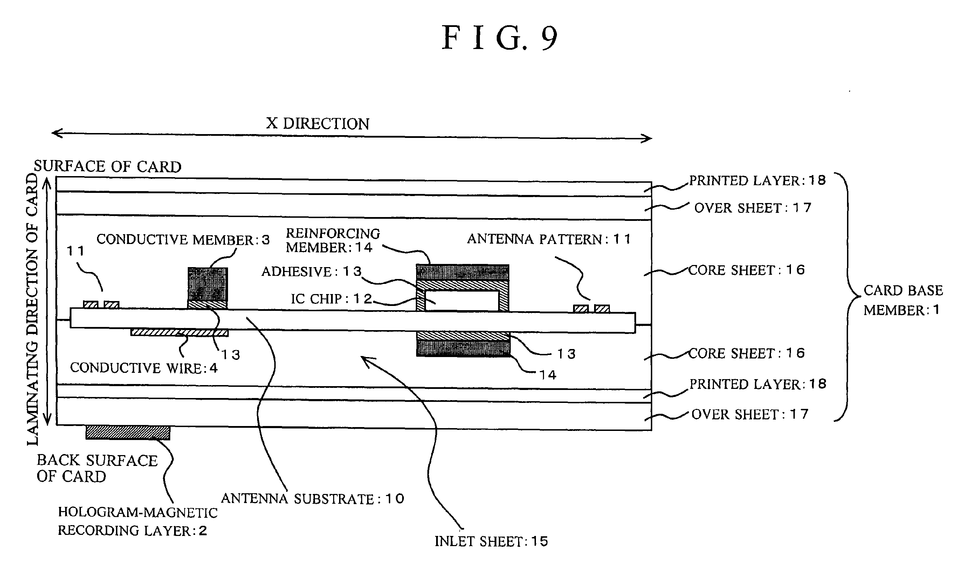

Furthermore, in the non-contact type IC card shown in Fig. 7, the conductive wire 4, which overlaps the antenna pattern 11, the hologram-magnetic recording layer 2, and the conductive member 3, has been mounted on the surface of the inlet sheet opposite to the IC chip-mounting surface of the inlet sheet 15 on which the IC chip 12 is mounted. However, as shown in Fig. 9, the conductive wire 4, which does not overlap the antenna pattern 11 and overlaps the hologram-magnetic recording layer 2 and the conductive member 3, may be mounted on the surface of the inlet sheet opposite to the IC chip-mounting surface of the inlet sheet 15 on which the IC chip 12 is mounted.

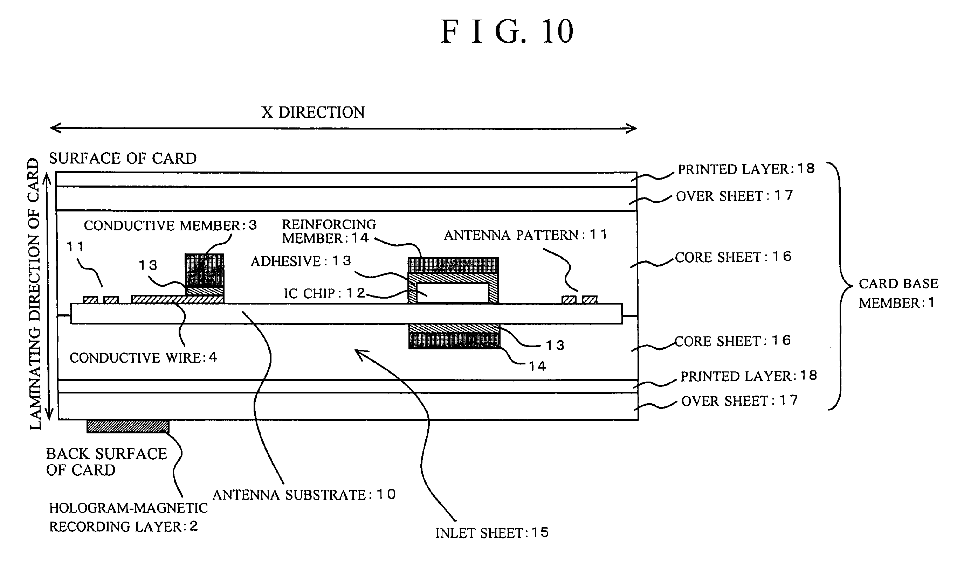

Further, as shown in Fig. 10, the conductive wire 4, which overlaps the hologram-magnetic recording layer 2 and the conductive member 3, may be mounted from the position in the vicinity of the antenna pattern 11 on the same surface of the inlet sheet as the IC chip-mounting surface of the inlet sheet 15 on which the IC chip 12 is mounted.

Furthermore, as shown in Figs. 1, 7, 9, and 10, the conductive member 3 is preferably embedded in the card base member 1 so as to be positioned close to the surface of the card base member (the surface of the card) opposite to the surface of the card base member on which the hologram-magnetic recording layer 2 is laminated, rather than the surface of the card base member (the back surface of the card) on which the hologram-magnetic recording layer 2 is laminated.

That is, it is preferable that the conductive member 3 be mounted on the same surface of the inlet sheet as the IC chip-mounting surface of the inlet sheet 15 on which the IC chip 12 is mounted.

Accordingly, the conductive member 3 can more easily attract the static electricity generated in the metal reflective layer 23 of the hologram-magnetic recording layer 2, so that it is possible to further prevent the electrostatic discharge failure of the IC chip 12 embedded in the non-contact type IC card.

### (SECOND EXEMPLARY EMBODIMENT)

Next, a second exemplary embodiment will be described.

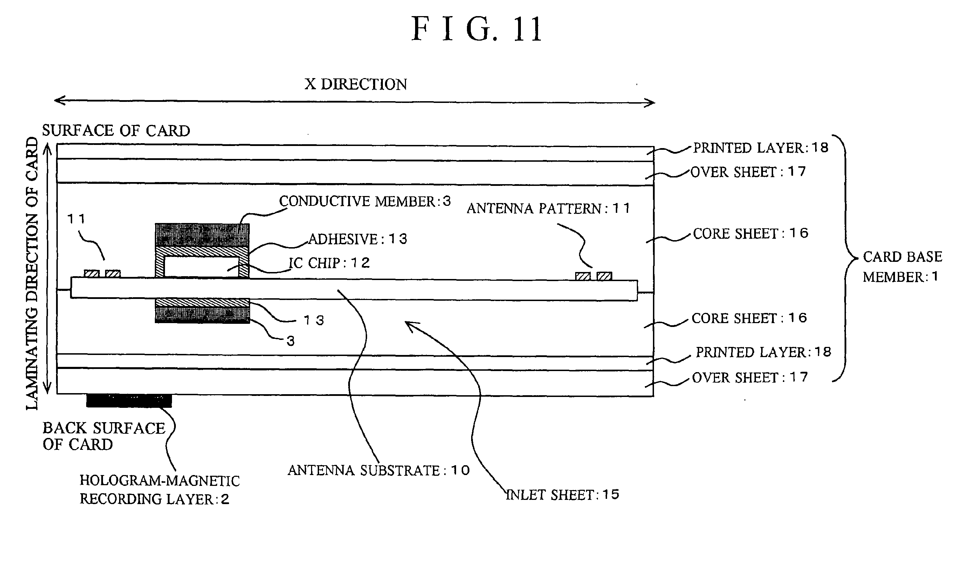

A non-contact type IC card according to a second exemplary embodiment is characterized in that a conductive member 3, which attracts the static electricity generated in the metal reflective layer 23 of the hologram-magnetic recording layer 2 and discharges the attracted static electricity to the outside of the card base member 1, is applied as the reinforcing member 14 for protecting the IC chip 12. The non-contact type IC card according to the second exemplary embodiment will be described below with reference to Figs. 11 to 17.

### <STRUCTURE OF NON-CONTACT TYPE IC CARD>

First, the structure of a non-contact type IC card according to the second exemplary embodiment will be described with reference to Fig. 11.

As shown in Fig. 11, the non-contact type IC card according to the second exemplary embodiment includes a card base member 1 and a hologram-magnetic recording layer 2.

Meanwhile, the card base member 1 is structured to include an inlet sheet 15, a core sheet 16, an over sheet 17, and a printed layer 18. The inlet sheet is mounted on an antenna substrate 10 so that an antenna pattern 11 and an IC chip 12 are electrically connected to each other. The core sheet, the over sheet, and the printed layer are formed of laminated base materials.

Further, the hologram-magnetic recording layer 2 is laminated on the over sheet 17 that is laminated on the back surface of the card base member 1.

Furthermore, the inlet sheet 15 of this exemplary embodiment is formed by mounting conductive members 3, which protect the IC chip 12 and discharge the static electricity generated in a metal reflective layer 23 of the hologram-magnetic recording layer 2 to the outside of the card base member 1, on the upper and lower surfaces of the antenna substrate 10 by an adhesive 13.

Meanwhile, examples of a material that may be used as the material of each parts of the non-contact type IC card according to this exemplary embodiment may be the same as those of the non-contact type IC card according to the first exemplary embodiment.

In the non-contact type IC card according to this exemplary embodiment, as shown in Fig. 11, the conductive members 3 mounted on the upper and lower surfaces of the antenna substrate 10 are preferably embedded in the card base member 1 so as to be positioned close to the surface of the card base member (the surface of the card) opposite to the surface of the card base member on which the hologram-magnetic recording layer 2 is laminated, rather than the surface of the card base member (the back surface of the card) on which the hologram-magnetic recording layer 2 is laminated.

That is, the inlet sheet 15 is preferably embedded in the card base member 1 so that a mounting surface for the IC chip 12 is positioned close to the surface of the card base member (the surface of the card) opposite to the surface of the card base member (the back surface of the card) on which the hologram-magnetic recording layer 2 is laminated.

Further, in the non-contact type IC card according to this exemplary embodiment , the conductive members are preferably embedded in the card base member 1 so that a part of the conductive members 3 mounted on the upper and lower surfaces of the anntenna substrate 10 overlap the hologram-magnetic recording layer in the laminating direction of the non-contact type IC card as shown in Fig. 11.

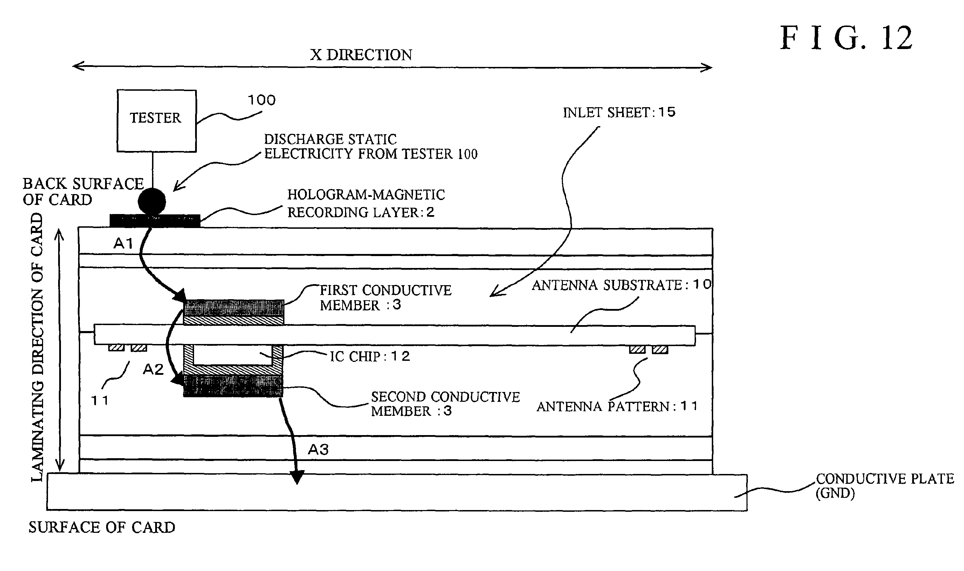

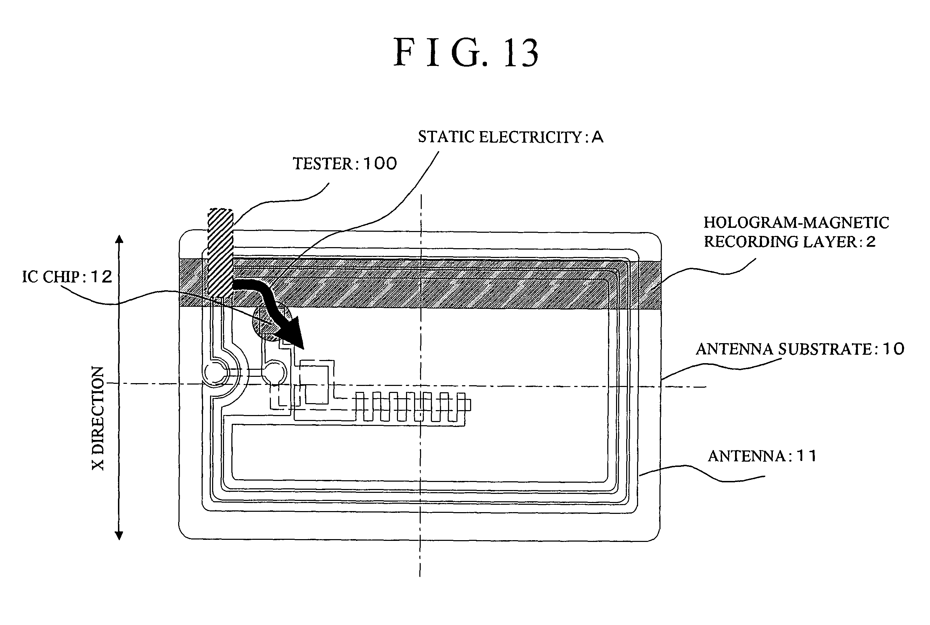

Accordingly, even when static electricity is discharged from a tester 100 to the metal reflective layer 23 of the hologram-magnetic recording layer 2 as shown in Figs. 12 and 13, the static electricity discharged to the metal reflective layer 23 can be attracted to a first conductive member 3 (A1 of Fig. 12), the static electricity attracted to the first conductive member 3 can be attracted to a second conductive member 3 (A2 of Fig. 12), and the static electricity attracted to the second conductive member 3 can be discharged to a conductive plate (GND) from the surface of the card base member (the surface of the card) opposite to the surface of the card base member (the back surface of the card) on which the hologram-magnetic recording layer 2 is laminated (A3 of Fig. 12). For this reason, it is possible to prevent the static electricity from flowing into the IC chip 12 embedded in the card base member 1 and the static electricity does not pass through the IC chip 12. As a result, it is possible to prevent the electrostatic discharge failure of the IC chip 12.

Meanwhile, Fig. 13 is a plan view of the non-contact type IC card shown in Fig. 12, as seen from the back surface of the card. An "X direction" shown in Fig. 13 corresponds to an "X direction" shown in Fig. 12. In the case of the structure of the non-contact type IC card shown in Fig. 12, as shown in Fig. 13, the static electricity "A" discharged from the tester 100 flows to the conductive plate (GND) through a route indicated by an arrow (→) shown in Fig. 13.

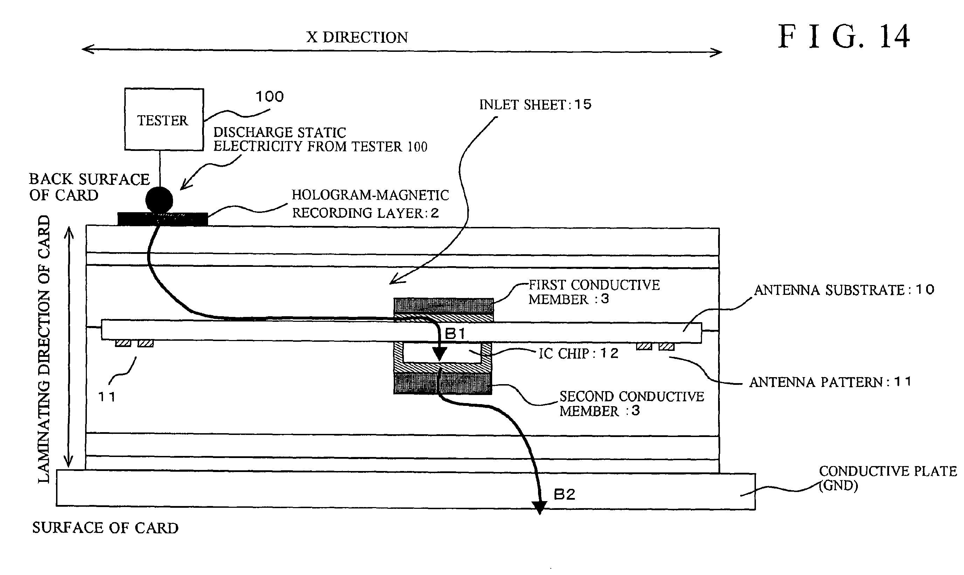

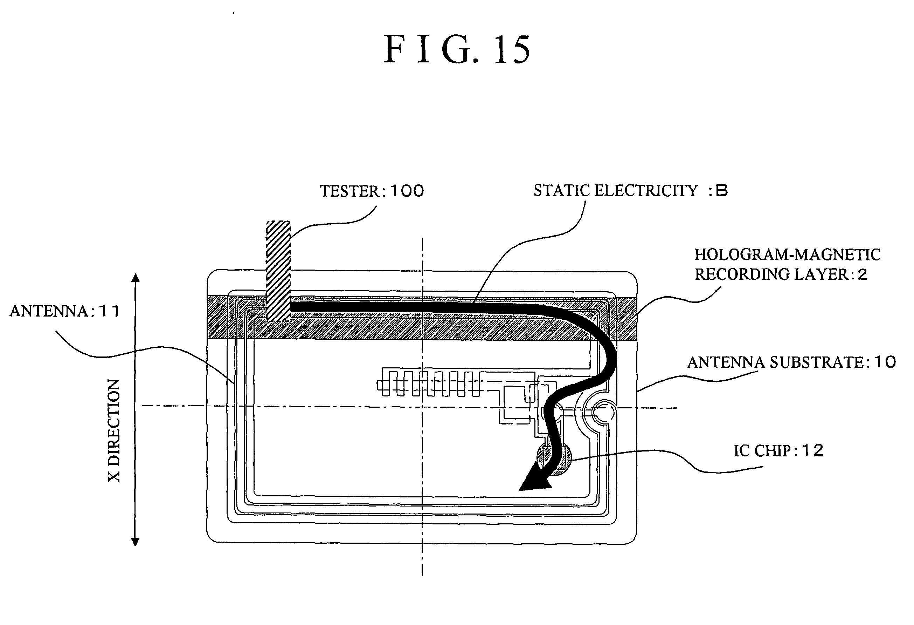

Meanwhile, in the case of a non-contact type IC card where the conductive members 3 mounted on the upper and lower surfaces of the antenna substrate 10 do not overlap the hologram-magnetic recording layer 2 in the laminating direction of the non-contact type IC card and the conductive members 3 are embedded in the card base member 1 so as to be positioned at positions distant from the hologram-magnetic recording layer 2 as shown in Figs. 14 and 15, if static electricity is discharged from a tester 100 to the metal reflective layer 23 of the hologram-magnetic recording layer 2, the static electricity discharged to the metal reflective layer 23 flows into the IC chip 12 (B1 of Fig. 14) through the antenna 11 where electricity easily flows (see Fig. 15). Then, the static electricity having flown into the IC chip 12 is attracted to the second conductive member 3, and the static electricity attracted to the second conductive member 3 is discharged to the conductive plate (GND) from the surface of the card base member (the surface of the card) opposite to the surface of the card base member (the back surface of the card) on which the hologram-magnetic recording layer 2 is laminated (B2 of Fig. 14). As a result, static electricity passes through the IC chip 12, so that the electrostatic discharge failure of the IC chip 12 embedded in the non-contact type IC card occurs.

Meanwhile, Fig. 15 is a plan view of the non-contact type IC card shown in Fig. 14, as seen from the back surface of the card. An "X direction" shown in Fig. 15 corresponds to an "X direction" shown in Fig. 14. In the case of the structure of the non-contact type IC card shown in Fig. 14, as shown in Fig. 15, the static electricity "B" discharged from the tester 100 flows to the conductive plate (GND) through a route indicated by an arrow (→) shown in Fig. 15.

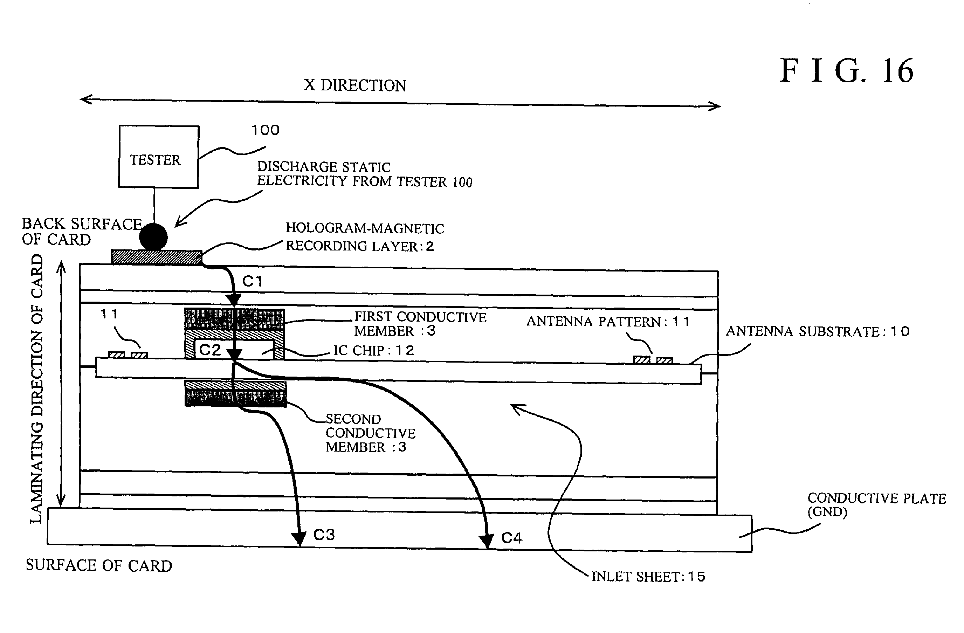

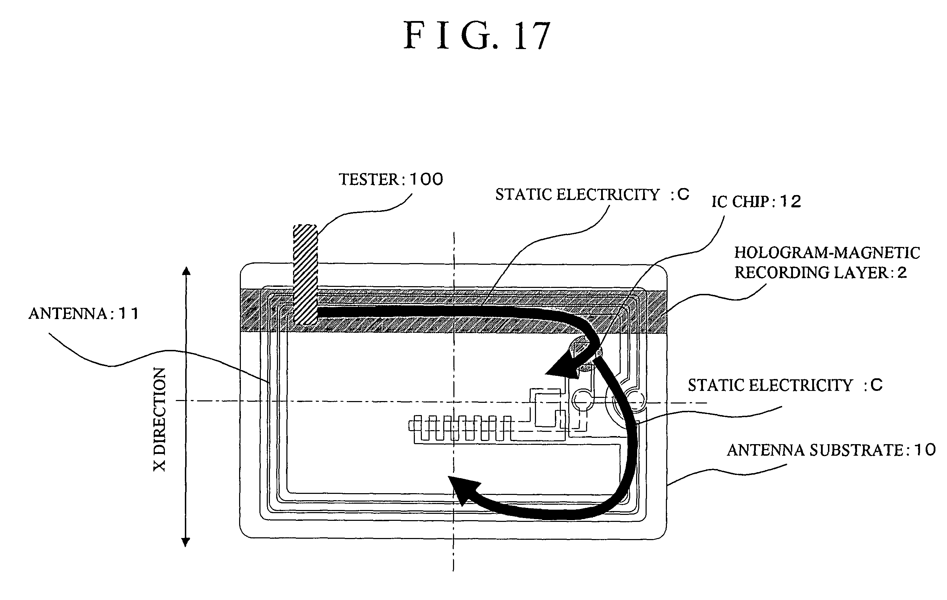

Further, in the case of a non-contact type IC card where the conductive members 3 mounted on the upper and lower surfaces of the antenna substrate 10 do not overlap the hologram-magnetic recording layer 2 in the laminating direction of the non-contact type IC card, the conductive members 3 are positioned at positions distant from the hologram-magnetic recording layer 2, and the conductive members 3 are embedded in the card base member 1 so as to be positioned close to the back surface of the card on which the hologram-magnetic recording layer 2 is laminated (so that a mounting surface for the IC chip 12 is positioned close to the back surface of the card) as shown in Figs. 16 and 17, if static electricity is discharged from the tester 100 to the metal reflective layer 23 of the hologram-magnetic recording layer 2, the static electricity discharged to the metal reflective layer 23 flows into the first conductive member 3 (C1 of Fig. 16) and the static electricity having flown into the first conductive member 3 flows into the IC chip 12 (C2 of Fig. 16). Then, the static electricity flown into the IC chip 12 flows into the second conductive member 3, and the static electricity flown into the second conductive member 3 is discharged to the conductive plate (GND) from the surface of the card base member (the surface of the card) opposite to the surface of the card base member (the back surface of the card) on which the hologram-magnetic recording layer 2 is laminated (C3 of Fig. 16). As a result, static electricity passes through the IC chip 12, so that the electrostatic discharge failure of the IC chip 12 embedded in the non-contact type IC card occurs.

Meanwhile, it may be considered that the static electricity flown into the IC chip 12 is discharged to the conductive plate (GND) through the antenna 11 (C4 of Fig. 16). However, static electricity passes through the IC chip 12, so that the electrostatic discharge failure of the IC chip 12 embedded in the non-contact type IC card occurs.

Fig. 17 is a plan view of the non-contact type IC card shown in Fig. 16, as seen from the back surface of the card. An "X direction" shown in Fig. 17 corresponds to an "X direction" shown in Fig. 16. In the case of the structure of the non-contact type IC card shown in Fig. 16, as shown in Fig. 17, the static electricity "C" discharged from the tester 100 flows to the conductive plate (GND) through a route indicated by an arrow (→) shown in Fig. 17.

Accordingly, as shown in Fig. 11, in the non-contact type IC card according to this exemplary embodiment, the conductive members 3 mounted on the upper and lower surfaces of the antenna substrate 10 are preferably embedded in the card base member 1 so as to be positioned close to the surface of the card base member (the surface of the card) opposite to the surface of the card base member on which the hologram-magnetic recording layer 2 is laminated, rather than the surface of the card base member (the back surface of the card) on which the hologram-magnetic recording layer 2 is laminated. Further, the conductive members are preferably embedded in the card base member 1 so that a part of the conductive members 3 mounted on the upper and lower surfaces of the antenna substrate 10 overlap the hologram-magnetic recording layer 2 in the laminating direction of the non-contact type IC card as shown in Fig. 11.

Accordingly, as shown in Fig. 12, it is possible to discharge the static electricity, which is generated in the metal reflective layer 23, to the conductive plate (GND) through two conductive members 3 mounted on the upper and lower surfaces of the antenna substrate 10. Therefore, it is possible to prevent static electricity from flowing into the IC chip 12, thereby preventing the electrostatic discharge failure of the IC chip 12 that is embedded in the non-contact type IC card.

### <EXAMPLES>

Examples of the non-contact type IC cards according to the above-mentioned first and second exemplary embodiments will be described below.

### <FIRST EXAMPLE>

First, a first example will be described.

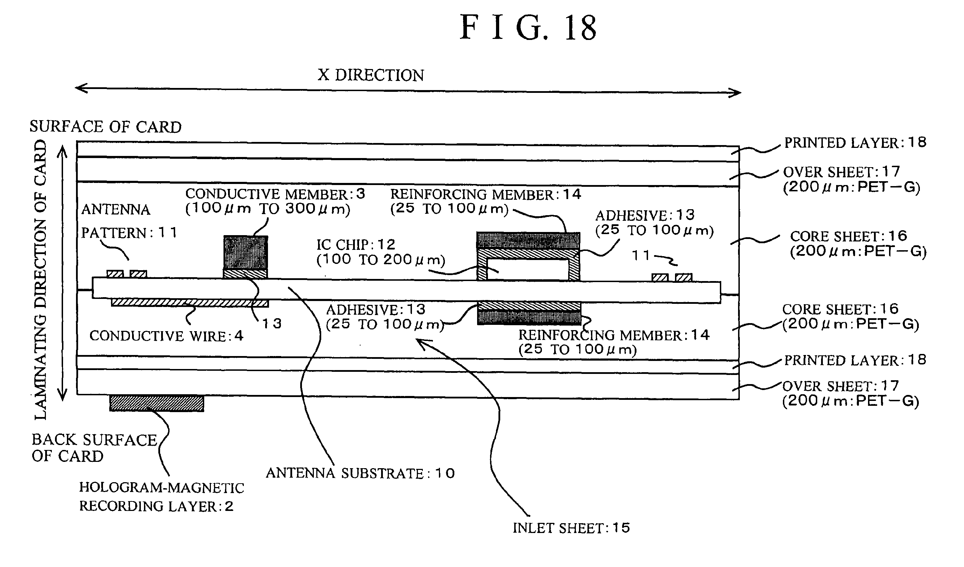

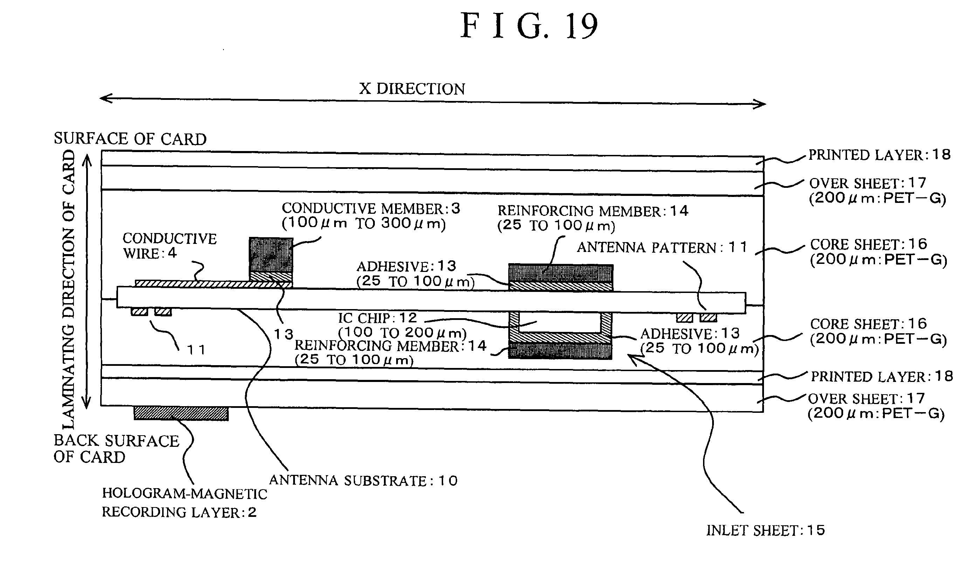

The first example corresponds to the case where an electrostatic test is performed using the above-mentioned non-contact type IC card according to the first exemplary embodiment. The non-contact type IC card of the first example will be described with reference to Figs. 18 and 19.

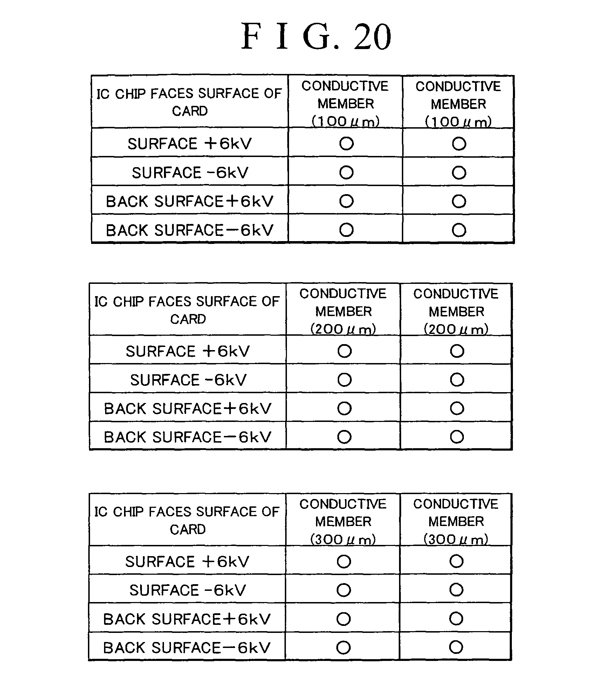

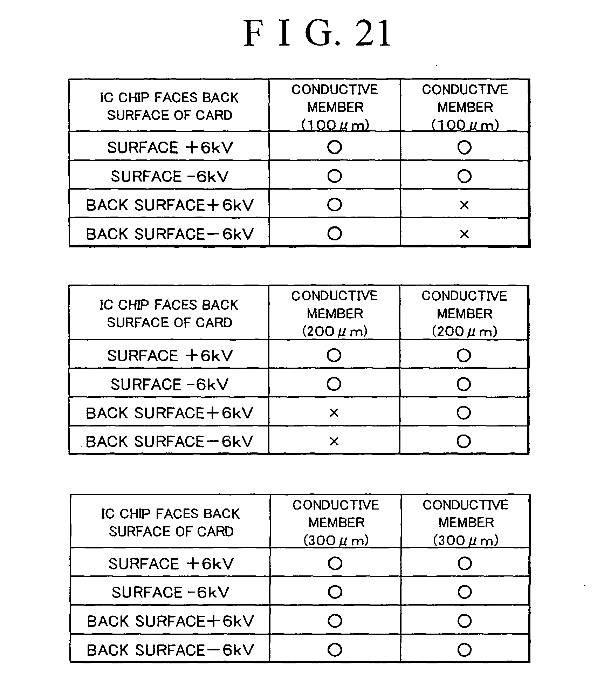

In the first example, the electrostatic test is performed in the case of the non-contact type IC card where the conductive member 3 does not overlap the hologram-magnetic recording layer 2 in the laminating direction of the non-contact type IC card, the conductive member 3 is positioned in the vicinity of the hologram-magnetic recording layer 2, and the conductive member 3 is embedded in the card base member 1 so as to be mounted on the same surface of the inlet sheet as the IC chip-mounting surface of the inlet sheet 15 on which the IC chip 12 is mounted as shown in Fig. 18 (the IC chip faces the surface of the card), and in the case of the non-contact type IC card where the conductive member 3 is positioned in the vicinity of the hologram-magnetic recording layer 2 and the conductive member 3 is embedded in the card base member 1 so as to be mounted on the surface of the inlet sheet opposite to the IC chip-mounting surface of the inlet sheet 15 on which the IC chip 12 is mounted as shown in Fig. 19 (the IC chip faces the back surface of the card). Meanwhile, Figs. 20 and 21 show test results when the electrostatic test is performed using the non-contact type IC cards shown in Figs. 18 and 19.

The test results shown in Fig. 20 are test results obtained by performing the electrostatic test in the cases where the thickness of the conductive member 3 of the non-contact type IC card shown in Fig. 18 is 100, 200, and 300 µm. The test results shown in Fig. 21 are test results obtained by performing the electrostatic test in the cases where the thickness of the conductive member 3 of the non-contact type IC card shown in Fig. 19 is 100, 200, and 300 µm.

As apparent from the test results shown in Figs. 20 and 21, the following test results were obtained. That is, the electrostatic test could be met regardless of the thickness of the conductive member 3 in the case of the structure of the non-contact type IC card shown in Fig. 18, and the electrostatic test could be met when the thickness of the conductive member 3 was 300 µm in the case of the structure of the non-contact type IC card shown in Fig. 19.

From the test results shown in Figs. 20 and 21, the following was found out. That is, as shown in Fig. 18, when the conductive member 3 was embedded in the vicinity of the hologram-magnetic recording layer 2 or at a position overlapping the hologram-magnetic recording layer 2; and the conductive member 3 was positioned close to the surface of the card base member (the surface of the card) opposite to the surface of the card base member on which the hologram-magnetic recording layer 2 was laminated, rather than the surface of the card base member (the back surface of the card) on which the hologram-magnetic recording layer 2 was laminated, excellent test results could be obtained. Further, when the thickness of the conductive member 3 was large, more excellent test results could be obtained.

### <SECOND EXAMPLE>

Next, a second example will be described.

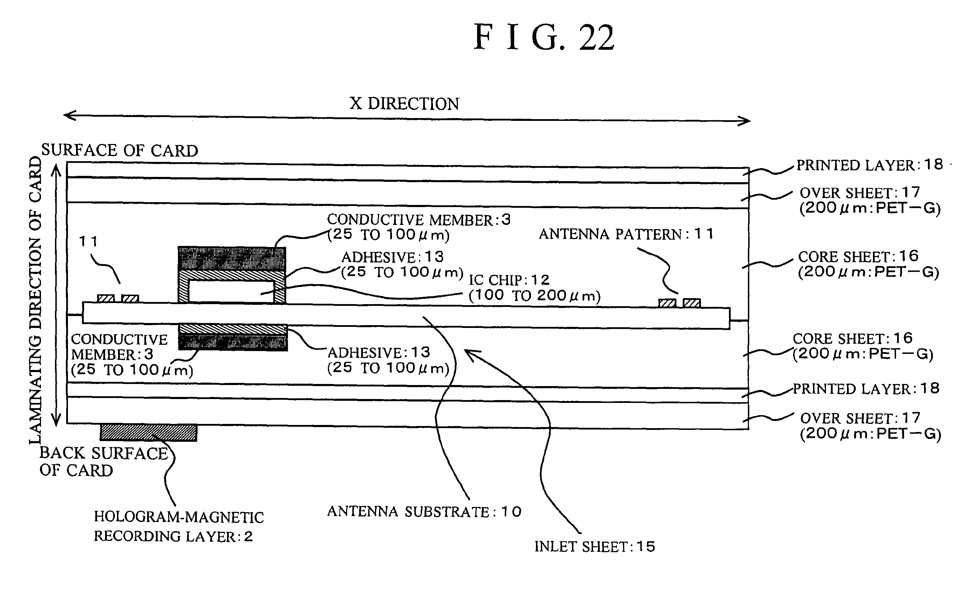

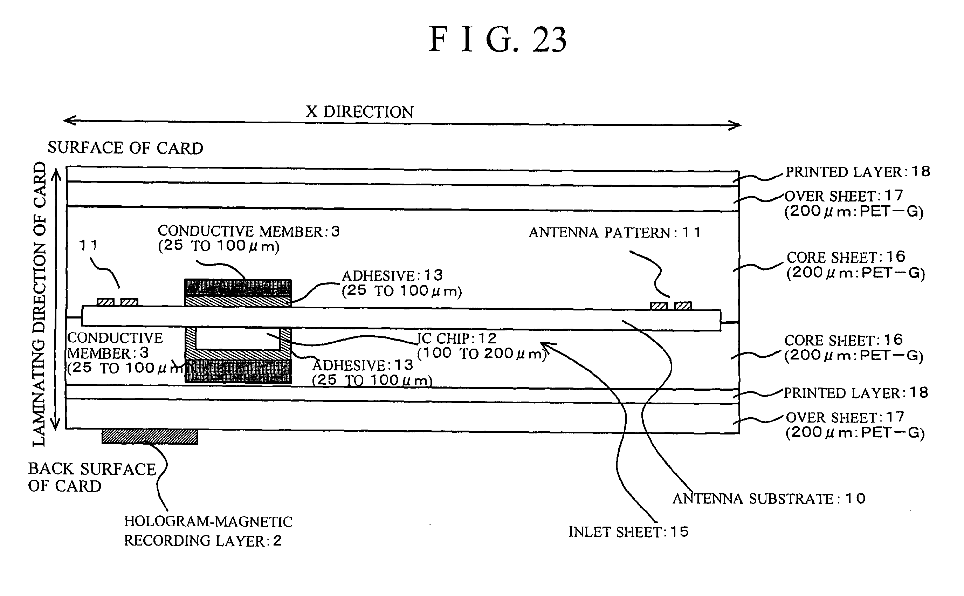

The second example corresponds to the case where the electrostatic test is performed using the above-mentioned non-contact type IC card according to the second exemplary embodiment. The non-contact type IC card of the second example will be described with reference to Figs. 22 and 23.

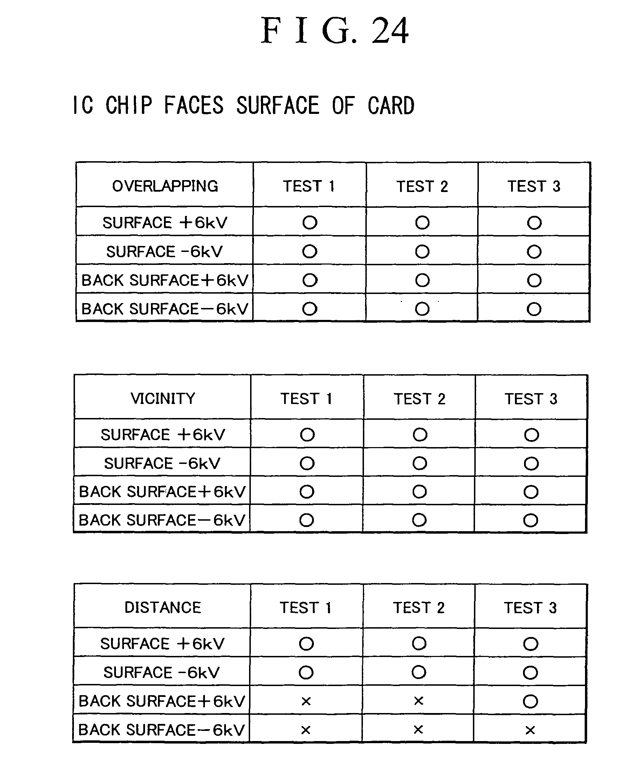

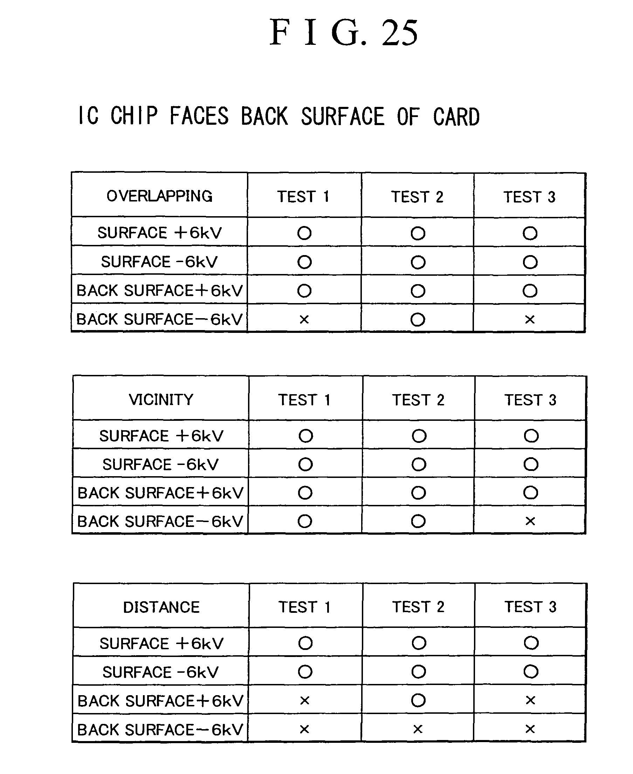

In the second example, the electrostatic test is performed in the case of the non-contact type IC card where the conductive members 3 mounted on the upper and lower surfaces of the antenna substrate 10 are embedded in the card base member 1 so as to be positioned close to the surface of the card base member (the surface of the card) opposite to the surface of the card base member on which the hologram-magnetic recording layer 2 is laminated, rather than the surface of the card base member (the back surface of the card) on which the hologram-magnetic recording layer 2 is laminated as shown in Fig. 22 (the IC chip is close to the surface of the card), and in the case of a non-contact type IC card where the conductive members 3 mounted on the upper and lower surfaces of the antenna substrate 10 are embedded in the card base member 1 so as to be positioned close to the surface of the card base member on which the hologram-magnetic recording layer 2 is laminated, rather than the surface of the card base member (the surface of the card) opposite to the surface of the card base member on which the hologram-magnetic recording layer 2 is laminated as shown in Fig. 23 (the IC chip is close to the back surface of the card). Meanwhile, Figs. 24 and 25 show test results when the electrostatic test is performed using the non-contact type IC cards shown in Figs. 22 and 23.

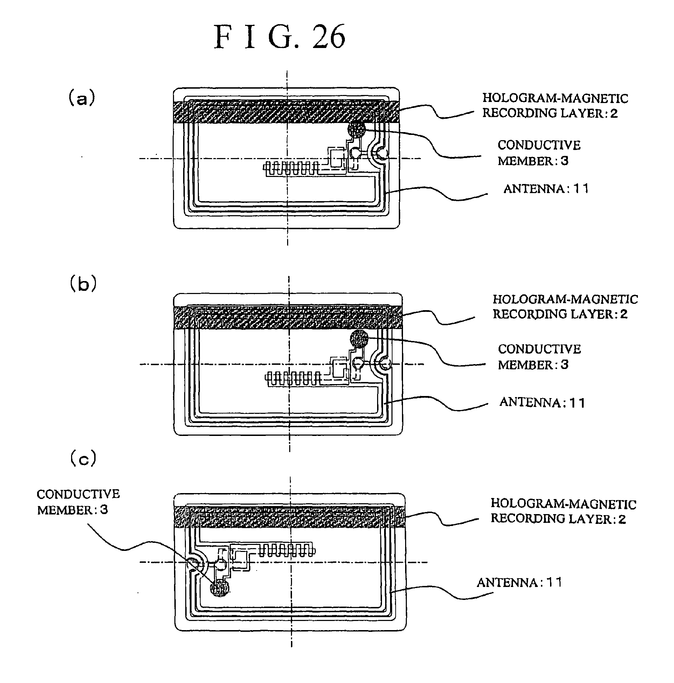

The test results shown in Fig. 24 are test results obtained by performing the electrostatic test in the cases where the IC chip shown in Fig. 22 is close to the surface of the card. Fig. 24 shows the test results obtained by performing the electrostatic test in the case where the conductive member 3 is disposed so as to overlap the hologram-magnetic recording layer 2 as shown in Fig. 26(a) (overlapping in Fig. 24), in the case where the conductive member 3 is disposed so as to be positioned in the vicinity of the hologram-magnetic recording layer 2 as shown in Fig. 26(b) (vicinity in Fig. 24), and in the case where the conductive member 3 is disposed at a position distant from the hologram-magnetic recording layer 2 as shown in Fig. 26(c) (distance in Fig. 24).

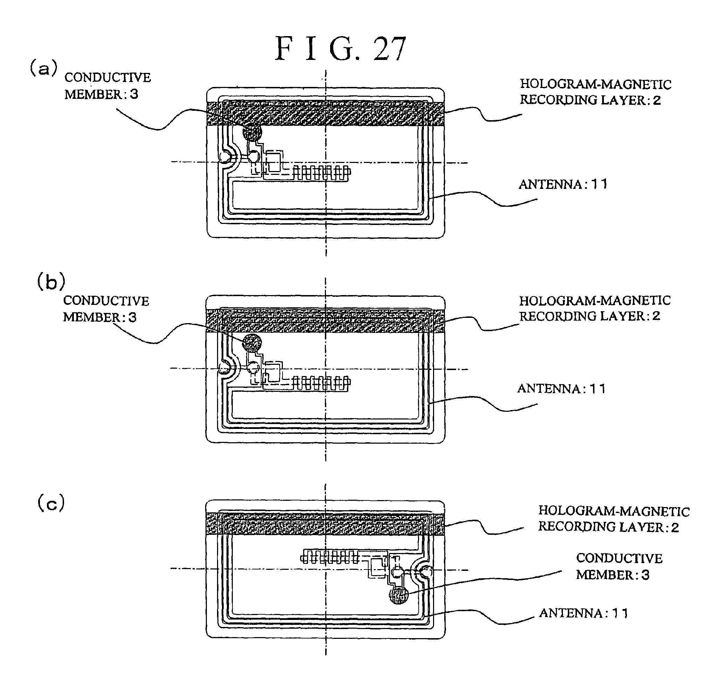

Further, the test results shown in Fig. 25 are test results obtained by performing the electrostatic test in the cases where the IC chip shown in Fig. 23 is close to the back surface of the card. Fig. 25 shows the test results obtained by performing the electrostatic test in the case where the conductive member 3 is disposed so as to overlap the hologram-magnetic recording layer 2 as shown in Fig. 27(a) (overlapping in Fig. 25), in the case where the conductive member 3 is disposed so as to be positioned in the vicinity of the hologram-magnetic recording layer 2 as shown in Fig. 27(b) (vicinity in Fig. 25), and in the case where the conductive member 3 is disposed at a position distant from the hologram-magnetic recording layer 2 as shown in Fig. 27(c) (distance in Fig. 25).

As apparent from the test results shown in Figs. 24 and 25, the following test results were obtained. That is, in the case of the structure of the non-contact type IC card shown in Fig. 22, when the conductive member 3 was positioned at a position overlapping the hologram-magnetic recording layer 2 or at a position in the vicinity of the hologram-magnetic recording layer as shown in Figs. 26(a) and 26(b), the electrostatic test could be met. In the case of the structure of the non-contact type IC card shown in Fig. 23, the electrostatic test could not be met regardless of the position of the conductive member 3.

From the test results shown in Figs. 24 and 25, the following was found out. That is, as shown in Fig. 22, when the conductive members 3 mounted on the upper and lower surfaces of the antenna substrate 10 were positioned close to the surface of the card base member (the surface of the card) opposite to the surface of the card base member on which the hologram-magnetic recording layer 2 was laminated, rather than the surface of the card base member (the back surface of the card) on which the hologram-magnetic recording layer 2 was laminated; and the conductive members 3 were positioned at positions overlapping the hologram-magnetic recording layer 2 or at positions in the vicinity of the hologram-magnetic recording layer 2, excellent test results could be obtained.

### <THIRD EXAMPLE>

Next, a third example will be described.

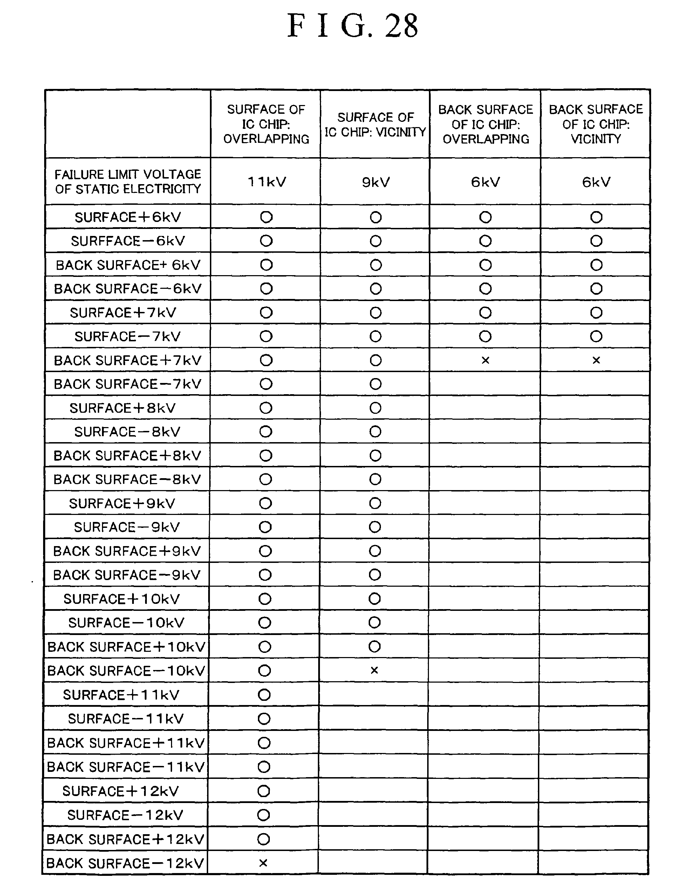

In the third example, the failure limit voltage of static electricity was tested in the case where the conductive member 3 was disposed so as to overlap the hologram-magnetic recording layer 2 as shown in Fig. 26(a), in the case where the conductive member 3 was positioned in the vicinity of the hologram-magnetic recording layer 2 as shown in Fig. 26(b), in the case where the conductive member 3 was disposed so as to overlap the hologram-magnetic recording layer 2 as shown in Fig. 27(a), and in the case where the conductive member 3 was positioned in the vicinity of the hologram-magnetic recording layer 2 as shown in Fig. 27(b). The test results thereof are shown in Fig. 28.

As apparent from the test results shown in Fig. 28, when the conductive member 3 was disposed so as to overlap the hologram-magnetic recording layer 2 as shown in Fig. 26(a) (surface of IC chip: overlapping in Fig. 28), it was found out that the electrostatic discharge failure of the IC chip 12 did not occur until the static electricity of 11 kV. When the conductive member 3 was disposed in the vicinity of the hologram-magnetic recording layer 2 as shown in Fig. 26(b) (surface of IC chip: vicinity in Fig. 28), it was found out that the electrostatic discharge failure of the IC chip 12 did not occur until the static electricity of 9 kV. Further, when the conductive member 3 was disposed so as to overlap the hologram-magnetic recording layer 2 as shown in Fig. 27(a) (back surface of IC chip: overlapping in Fig. 28), it was found out that the electrostatic discharge failure of the IC chip 12 did not occur until the static electricity of 6 kV. Furthermore, when the conductive member 3 was disposed in the vicinity of the hologram-magnetic recording layer 2 as shown in Fig. 27(b) (back surface of IC chip: vicinity in Fig. 28), it was found out that the electrostatic discharge failure of the IC chip 12 did not occur until the static electricity of 6 kV.

From the test results shown in Fig. 28, the following was found out. That is, as shown in Fig. 22, when the conductive members 3 mounted on the upper and lower surfaces of the antenna substrate 10 were positioned close to the surface of the card base member (the surface of the card) opposite to the surface of the card base member on which the hologram-magnetic recording layer 2 was laminated, rather than the surface of the card base member (the back surface of the card) on which the hologram-magnetic recording layer 2 was laminated; and the conductive members 3 were positioned at positions overlapping the hologram-magnetic recording layer 2 as shown in Fig. 26(a), the most excellent test results could be obtained.

From the above-mentioned test results, the following was found out in the first example. That is, as shown in Fig. 18, when the conductive member 3 was embedded at a position in the vicinity of the hologram-magnetic recording layer 2 or at a position overlapping the hologram-magnetic recording layer 2; and the conductive member 3 was positioned close to the surface of the card base member (the surface of the card) opposite to the surface of the card base member on which the hologram-magnetic recording layer 2 was laminated, rather than the surface of the card base member (the back surface of the card) on which the hologram-magnetic recording layer 2 was laminated, excellent test results could be obtained. Further, when the thickness of the conductive member 3 was large, more excellent test results could be obtained.

The following was found out in the second example. That is, as shown in Fig. 22, when the conductive members 3 mounted on the upper and lower surfaces of the antenna substrate 10 were positioned close to the surface of the card base member (the surface of the card) opposite to the surface of the card base member on which the hologram-magnetic recording layer 2 was laminated, rather than the surface of the card base member (the back surface of the card) on which the hologram-magnetic recording layer 2 was laminated; and the conductive members 3 were positioned at positions overlapping the hologram-magnetic recording layer 2 as shown in Fig. 26(a) or at positions in the vicinity of the hologram-magnetic recording layer 2 as shown in Fig. 26(b), excellent test results could be obtained.

In addition, the following was found out in the third example. That is, when the conductive member is disposed at a position overlapping the hologram-magnetic recording layer 2 as shown in Fig. 26(a), the most excellent test results could be obtained.

Meanwhile, the above-mentioned exemplary embodiments are preferred exemplary embodiments of the present invention. The present invention is not limited to the above-mentioned exemplary embodiments, and may have various modifications without departing from the scope of the prevent invention. For example, the layer structure of the card base member 1 of the non-contact type IC card according to this exemplary embodiment is not particularly limited. As long as the inlet sheet 15 on which the antenna 11 and the IC chip 12 connected to the antenna 11 are mounted is embedded in the card base member 1, the card base member 1 may have any layer structure.

Further, the non-contact type IC cards according to the above-mentioned exemplary embodiments have been formed by mounting the conductive members 3 on the inlet sheet 15 on which the antenna pattern 11 and the IC chip 12 are mounted on the same side, but may also be formed by mounting the conductive members 3 on the inlet sheet 15 on which the antenna pattern 11 and the IC chip 12 are mounted on the different sides.

Furthermore, the non-contact type IC card where the hologram-magnetic recording layer 2 including the magnetic recording layer 22, the metal reflective layer 23, and the hologram layer 24, is laminated on the back surface of the card has been described in the above-mentioned exemplary embodiments. However, the scope of the present invention is not limited to the non-contact type IC card where the hologram-magnetic recording layer 2 is laminated on the back surface of the card, and may be applied to any non-contact type IC card where the hologram-magnetic recording layer 23 for generating static electricity is laminated on the surface of the card base member.

### Industrial Applicability

The non-contact type IC card according to the present invention may be applied to information recording media that perform non-contact communication, such as commutation tickets and coupon ticket for various means of transportation, a telephone card, an admission card for a specified region, an ID card, a license, cards used for pachinko, an amusement park, and a movie theater, and a credit card.

### Brief Description of the Drawings

Fig. 1 is a view showing a first exemplary structural example of a non-contact type IC card according to a first embodiment.
Fig. 2 is a view showing the layer structure of a hologram-magnetic recording layer 2 that is mounted on the non-contact type IC card according to the exemplary embodiment.
Fig. 3 is a view showing a structural example where a hologram-magnetic recording layer 2 is mounted on a non-contact type IC card in the related art.
Fig. 4 is a view showing the structure of a circuit used for an electrostatic test that is defined by "JIS X 6305-6:2001(ISO/IEC 10373-6:2001)" or "JIS X 6305-7:2001(ISO/IEC 10373-7:2001)".
Fig. 5 is a view showing divided regions that are formed on the card in the electrostatic discharge test, and a view showing that each of the surface and the back surface of the non-contact type IC card is divided into twenty regions in the form of a 4 x 5 matrix.
Fig. 6 is a plan view of the non-contact type IC card shown in Fig. 1, as seen from the surface of the card.
Fig. 7 is a view showing a second structural example of the non-contact type IC card according to the first exemplary embodiment.
Fig. 8 is a plan view of the non-contact type IC card shown in Fig. 7, as seen from the surface of the card.
Fig. 9 is a view showing the structure where a conductive wire 4 of the non-contact type IC card shown in Fig. 7 is formed to have a length enough to overlap a hologram-magnetic recording layer 2 and a conductive member 3.
Fig. 10 is a view showing the structure where the conductive wire 4 having a length enough to overlap the hologram-magnetic recording layer 2 and the conductive member 3 is mounted on the same surface of an inlet sheet as an IC chip-mounting surface of an inlet sheet 15 on which an IC chip 12 is mounted.
Fig. 11 is a view showing a structural example of a non-contact type IC card according to a second exemplary embodiment.
Fig. 12 is a view illustrating a route through which static electricity passes in the card when an electrostatic test is performed on the non-contact type IC card according to the second exemplary embodiment.
Fig. 13 is a plan view of the non-contact type IC card shown in Fig. 12, as seen from the back surface of the card.
Fig. 14 is a view illustrating a route through which static electricity passes in the card when an electrostatic test is performed on a non-contact type IC card having low electrostatic resistance.
Fig. 15 is a plan view of the non-contact type IC card shown in Fig. 14, as seen from the back surface of the card.
Fig. 16 is a view illustrating a route through which static electricity passes in the card when an electrostatic test is performed on a non-contact type IC card having low electrostatic resistance.
Fig. 17 is a plan view of the non-contact type IC card shown in Fig. 16, as seen from the back surface of the card.
Fig. 18 is a view showing a first structural example of a non-contact type IC card that is used in an electrostatic test of a first example.
Fig. 19 is a view showing a second structural example of the non-contact type IC card that is used in the electrostatic test of the first example.
Fig. 20 is a view showing test results that are obtained by performing an electrostatic test on the non-contact type IC card having a structure shown in Fig. 18.
Fig. 21 is a view showing test results that are obtained by performing an electrostatic test on the non-contact type IC card having a structure shown in Fig. 19.
Fig. 22 is a view showing a first structural example of a non-contact type IC card that is used in an electrostatic test of a second example.
Fig. 23 is a view showing a second structural example of the non-contact type IC card that is used in the electrostatic test of the second example.
Fig. 24 is a view showing test results that are obtained by performing an electrostatic test on the non-contact type IC card having a structure shown in Fig. 22.
Fig. 25 is a view showing test results that are obtained by performing an electrostatic test on the non-contact type IC card having a structure shown in Fig. 23.
Fig. 26 is a view showing the positions of a hologram-magnetic recording layer 2 and a conductive member 3 when a positional relationship therebetween is changed in the non-contact type IC card having a structure shown in Fig. 22.
Fig. 27 is a view showing the positions of a hologram-magnetic recording layer 2 and a conductive member 3 when a positional relationship therebetween is changed in the non-contact type IC card having a structure shown in Fig. 23.
Fig. 28 is a view showing test results of an electrostatic test of a third example.

### Description of the reference numerals

- 1: Card base member
- 2: Hologram-magnetic recording layer
- 3: Conductive member
- 4: Conductive wire
- 10: Antenna substrate
- 11: Antenna pattern (antenna)
- 12: IC chip
- 13: Adhesive
- 14: Reinforcing member
- 15: Inlet sheet
- 16: Core sheet
- 17: Over sheet
- 18: Printed layer
- 21: Adhesion layer
- 22: Magnetic recording layer
- 23: Metal reflective layer
- 24: Hologram layer
- 25: Protection layer
- 26: Release layer
- 27: Support layer

## Claims

1. A non-contact type IC card where an inlet sheet on which an antenna and an IC chip connected to the antenna are mounted is embedded in a card base member and a metal reflective layer is laminated on the surface of the card base member, the non contact type IC card comprising:
conductive members that are embedded in the card base member, and attract static electricity generated in the metal reflective layer and discharge the static electricity from a second surface of the card base member opposite to a first surface of the card base member on which the metal reflective layer is laminated.

2. The non-contact type IC card according to claim 1,
wherein the conductive members are embedded in the card base member so as to be positioned close to the second surface of the card base member rather than the first surface of the card base member.

3. The non-contact type IC card according to claim 1 or 2,
wherein the conductive members are embedded in the card base member so that at least a part of the conductive members overlap the metal reflective layer in a laminating direction of the non-contact type IC card.

4. The non-contact type IC card according to claim 1 or 2,
wherein the conductive members are embedded in the card base member so as to be positioned in the vicinity of the metal reflective layer without overlapping the metal reflective layer in a laminating direction of the non-contact type IC card.

5. The non-contact type IC card according to any one of claims 1 to 4,
wherein the conductive members are mounted on the same surface of the inlet sheet as an IC chip-mounting surface of the inlet sheet on which the IC chip is mounted.

6. The non-contact type IC card according to claim 4, further comprising:
a conductive wire that is embedded in the card base member, and attracts static electricity generated in the metal reflective layer to the conductive members.

7. The non-contact type IC card according to claim 6,
wherein the conductive wire is mounted on the surface of the inlet sheet opposite to the IC chip-mounting surface of the inlet sheet on which the IC chip is mounted.

8. The non-contact type IC card according to claim 6,
wherein the conductive wire is mounted on the same surface of the inlet sheet as the IC chip-mounting surface of the inlet sheet on which the IC chip is mounted.

9. The non-contact type IC card according to claim 5,
wherein the conductive member has a thickness corresponding to a distance between a mounting position on the surface of the inlet sheet and the second surface of the card base member.

10. The non-contact type IC card according to any one of claims 1 to 4,
wherein the conductive members are embedded in the card base member so as to be positioned on upper and lower surfaces of the IC chip through the inlet sheet.

11. The non-contact type IC card according to claim 10,
wherein the conductive members are reinforcing members for reinforcing the IC chip.

12. The non-contact type IC card according to claim 1,
wherein a magnetic recording layer, the metal reflective layer, and a hologram layer are sequentially laminated on the surface of the card base member.
